(19) Europäisches Patentamt
European Patent Office
Office européen des brevets

(11) EP 4 655 327 B1

(12) EUROPEAN PATENT SPECIFICATION

(45) Date of publication and mention of the grant of the patent:
**11.03.2026 Bulletin 2026/11**

(21) Application number: **24837042.1**

(22) Date of filing: **20.12.2024**

(51) International Patent Classification (IPC):
***C08F 293/00** (2006.01)* ***C08F 2/32** (2006.01)*

(52) Cooperative Patent Classification (CPC):
**C08F 293/005; C08F 2/32;** C08F 2438/03

(86) International application number:
**PCT/EP2024/088216**

(87) International publication number:
**WO 2025/141012 (03.07.2025 Gazette 2025/27)**

(54) **METHOD FOR PREPARING A POLYMER BY RADICAL POLYMERIZATION IN INVERSE EMULSION**

VERFAHREN ZUR HERSTELLUNG EINES POLYMERS DURCH RADIKALISCHE POLYMERISATION IN UMGEKEHRTER EMULSION

PROCÉDÉ DE PRÉPARATION D’UN POLYMÈRE PAR POLYMÉRISATION RADICALAIRE EN ÉMULSION INVERSE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.12.2023 FR 2315433**

(43) Date of publication of application:
**03.12.2025 Bulletin 2025/49**

(73) Proprietor: **SNF Group**
**42160 Andrézieux-Bouthéon (FR)**

(72) Inventors:
- **BRAUN, Olivier**
**42160 Andrezieux-Boutheon (FR)**
- **SOUZY, Renaud**
**42160 Andrezieux-Boutheon (FR)**

(74) Representative: **Ipsilon**
**Le Contemporain**
**50 Chemin de la Bruyère**
**69574 Dardilly Cedex (FR)**

(56) References cited:
**WO-A1-2020/094963** **WO-A2-2008/000766**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 655 327 B1

## Description

### Technical field of the invention

The present invention relates to a method for preparing a water-soluble block polymer by radical polymerization, by reversible addition-fragmentation chain transfer in inverse emulsion.

### Prior art

Block polymers are polymers composed of at least two different monomer blocks. To obtain them, it is custom to polymerise a first monomer phase and then add a second different monomer phase. There are different techniques to obtain these polymers, like controlled radical polymerisation, template polymerisation, polymerisation on a macromonomer, the functionalisation of prepolymers enabling the formation of a covalent bond between said prepolymers, or also the use of two monomers having a reactivity ratio broadly in favour of one of the two.

High molecular weight block polymers are impossible to prepare in solution, or thus with a very low concentration. Indeed, the high viscosity resulting from the formation of the polymer prevents the homogeneous incorporation of a second hydrophilic phase, leading to composition derivatives of the final polymer and a limited molecular weight.

Inverse emulsion polymerisation (water-in-oil) is known to avoid problems linked to the viscosity of the polymerised solution, it consists of dissolving the monomers in an aqueous solvent, of emulsifying the monomer solution in an oil to obtain a water-in-oil emulsion, and of performing the polymerisation of monomers in the dispersed phase of the emulsion.

Documents US4152200, US4191645, US4217262 and US5171783 disclose the preparation of a polymer by means of an inverse emulsion method comprising the progressive addition, during the polymerisation, of a hydrophilic phase comprising monomers. This results in a poor incorporation of the hydrophilic phase in the inverse emulsion, thus a plurality of droplets are obtained, having different monomeric compositions, which leads to composition derivatives of the desired polymer.

WO 2008/000766 discloses a method for preparing a block copolymer by controlled radical polymerization of a diallyl amine derivative monomer.

WO 2020/094963 discloses a method for preparing high molecular weight polymers by controlled radical polymerization.

The Applicant has developed a radical polymerisation method, making it possible to obtain inverse emulsions with a good incorporation of the hydrophilic phase, which thus makes it possible to access high molecular weight and high concentration block polymers.

Without wanting to be linked to any theory, the Applicant puts forward the possibility that the combination between (1) a control agent used for a polymerisation by reversible addition-fragmentation chain transfer, (2) the size of the polymer chains of the prepolymer formed in a first step and (3) the control of the viscosity of the hydrophilic phase of the inverse emulsion, enables a better integration of a second hydrophilic phase to the first hydrophilic phase of the inverse emulsion already formed.

The method of the invention falls under a principle of environmental awareness and of the impact of industries and man on the planet. This method enables the obtaining of high concentration, high molecular weight block polymers, thus improving the yield with respect to a conventional polymerisation and the use of an inverse emulsion makes it possible to reduce the quantity of energy associated with the homogenisation of the less viscous medium, making it possible to reduce the quantity of greenhouse gas emissions such as the $CO_2$ associated with the production of these polymers.

### Disclosure of the invention

The invention relates to a method for preparing, by radical polymerisation, a water-soluble block polymer by reversible addition-fragmentation chain transfer in inverse emulsion comprising the following steps:

a) Mixing a hydrophilic phase PH1 and a lipophilic phase PL1 under stirring, in order to form an inverse emulsion EMI1, the hydrophilic phase PH1 comprising at least one hydrophilic solvent SH1, at least one monomer A and at least one water-soluble control agent of formula (I):

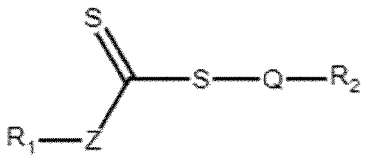

(I)

wherein

- Z represents O, S or $NR_3$;
- $R_1$ and $R_2$ and $R_3$, identical or different, represent:

  * an optionally substituted alkyl, acyl, alcenyl or alcynyl group (i), or
  * a carbon cycle (ii), saturated or not, optionally substituted or aromatic, or
  * a heterocycle (iii), saturated or not, optionally substituted or aromatic,

  these groups and cycles (i), (ii) and (iii) being able to be substituted by substituted aromatic groups or by alkoxycarbonyl or aryloxycarbonyl (-COOR), carboxy (-COOH), acyloxy ($-O_2CR$), carbamoyl ($-CON(R)_2$), cyano (-CN), alkylcarbonyl, alkylarylcarbonyl, arylcarbonyl, arylalkylcarbonyl, phtalimido, maleimido, succinimido, amidino, guanidimo, hydroxy (-OH), amino ($-N(R)_2$), halogen, allyl, epoxy, alkoxy (-OR), S-alkyl, S-aryl groups, groups having a hydrophilic or ionic character, such as carboxylic acid alkaline salts, sulfonic acid alkaline salts, alkylene polyoxide chains (POE, POP), cationic substitutes (quaternary ammonium salts);
- R representing a $C_1$-$C_{20}$ alkyl or aryl group;
- $R_3$ can further represent a hydrogen atom;
- Q is single bond between the sulfur atom and the $R_2$ group, or a linear or structured polymer chain comprising n identical or different hydrophilic monomers comprising at least one ethylenic function;
- n is an integer of between 2 and 500, advantageously between 2 and 100, more between advantageously 2 and 50,

the lipophilic phase PL1 comprising at least one lipophilic solvent and at least one water-in-oil emulsifying agent;
b) Polymerisation P1, in the presence of at least one initiator, of at least the monomer A of the inverse emulsion EMI1 to form a prepolymer PP1 having a molecular weight of between 10 000 and 3 000 000g/mol and having an apparent viscosity of between 400 and 100 000cps;
c) Addition to and mixture to the inverse emulsion EMI1, of a hydrophilic phase PH2 comprising at least one hydrophilic solvent SH2, at least one monomer B to form an inverse emulsion EMI2;
the hydrophilic phase PH2 and the hydrophilic phase PH1 having distinct compositions,
d) Polymerisation P2, in the presence of at least one initiator, of at least the monomer B on the prepolymer PP1, in order to form a water-soluble block polymer.

According to an embodiment, Z = S-Q' (formula (I) = $R_1$-Q'-S-C(=S)-S-Q-$R_2$), wherein Q' is a linear or structured polymeric chain comprising n' identical or different monomers comprising at least one ethylenic function. Q' and n' are defined according to the definition of Q and n, as shown above below. Q and Q' may be equal or different. n and n' may be equal or different.

The present invention also relates to a water-soluble block polymer obtained according to this method.

The present invention also relates to the use of this water-soluble block polymer in: hydrocarbon recovery (oil or gas); drilling wells; cementing wells; stimulation of hydrocarbon wells (oil or gas), for example hydraulic fracturing; conformance; diversion; open, closed or semi-closed circuit water treatment; treatment of fermentation broth; sludge treatment; construction; paper or cardboard manufacture; batteries; wood treatment; treatment of hydraulic composition (concrete, cement, mortar and aggregates); mining; formulation of cosmetic products; formulation of detergents; textile manufacture; geothermal energy; manufacture of nappies; or agriculture.

Finally the present invention also relates to the use of this water-soluble block polymer as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticising agent, clay inhibitor or dispersant.

## Description of the invention

By "polymer", is meant a polymer obtained from at least two different monomers, this can be a copolymer, a

terpolymer or a polymer prepared from more than three different monomers.

By "block polymer", is meant di-blocks, tri-blocks or multi-blocks.

By "hydrophilic monomer", is meant a monomer that has an octanol-water partition coefficient, $K_{ow}$, less than or equal to 1, wherein the partition coefficient $K_{ow}$ is determined at 25°C in an octanol-water mixture with a volume ratio of 1/1, at a pH of between 6 and 8.

By "hydrophobic monomer", is meant a monomer that has an octanol-water partition coefficient, $K_{ow}$, greater than 1, wherein the partition coefficient $K_{ow}$ is determined at 25°C in an octanol-water mixture with a volume ratio of 1/1, at a pH of between 6 and 8.

The octanol-water partition coefficient, $K_{ow}$, represents the ratio of concentrations (g/L) of a monomer between the octanol phase and the aqueous phase. It is defined as follows:

$$K_{ow} = \frac{[monomer]_{octanol}}{[monomer]_{water}}$$

By "water-soluble polymer" or "water-soluble control agent", is meant a polymer or an agent which gives an aqueous solution without insoluble particle, when it is dissolved under stirring at 25°C and with a concentration of $10 g.L^{-1}$ in deionised water.

By "X and/or Y", is meant "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

By "water-in-oil emulsifying agent", is meant a compound capable of emulsifying water in an oil and an "oil-in-water emulsifying agent" is a compound capable of emulsifying an oil in water. Generally, it is considered that an emulsifying agent of the water-in-oil type is a surfactant having an HLB strictly less than 8, and that an oil-in-water emulsifying agent is a surfactant having an HLB greater than or equal to 10. A surfactant having an HLB of between 8 and 10 is considered as a wetting agent. A person skilled in the art can refer to the document, *"Handbook of Applied Surface and Colloid Chemistry"* by K.Holmberg, Chapter 11, if needed.

The hydrophilic-lipophilic balance (HLB) of a chemical compound is a measurement of its hydrophilic and/or lipophilic properties, determined by calculating the values for the different regions of the molecule, such as described by Griffin in 1949.

In the present invention, the Griffin method has been adopted, based on calculating a value based on the chemical groups of the molecule. Griffin has attributed a dimensionless number between 0 and 20 to give information on the solubility of water and oil.

The HLB value of a substance having a total molecular mass M and a hydrophilic part of a molecular mass Mh is given by:

$$HLB = 20\ (Mh/M).$$

The molecular weight is advantageously determined from the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:

$$[\eta] = K\ M^{\alpha}$$

**[η]** represents the intrinsic viscosity of the polymer as determined by the solution viscosity method.
**K** represents an empirical constant.
**M** represents the molecular weight of the polymer.
$\alpha$ represents the Mark-Houwink coefficient.
**K** and $\alpha$ depend on the particular polymer-solvent system.

The apparent viscosity of the prepolymer PP1 of the hydrophilic phase of the inverse emulsion EMI1 is measured

according to the following method:

- precipitation in the acetone of the prepolymer PP1, under stirring at 1000rpm (rotations per minute);
- recovering by filtration of the prepolymer PP1 in solid form;
- drying of the prepolymer PP1 in solid form in a heat chamber at 30°C for 24 hours;
- solubilizing the dried prepolymer PP1 in a 1 M sodium chloride solution, at 7% by weight in water;
- measuring the apparent viscosity of the prepolymer PP1 solution using a Brookfield LVT or LVD viscosimeter at a temperature of 25°C.

**Method for preparing the polymer**

The polymerisation is a radical polymerisation. The radical polymerisation includes the polymerisation by means of UV, azoic, thermal initiators, or redox salts.

The polymerisation is done by reversible addition-fragmentation chain transfer polymerisation (RAFT).

RAFT is a reversible deactivation radical polymerisation (RDRP) technique, combining both the facility to implement conventional radical polymerisation and the living character of ionic polymerisation.

RAFT is based on a reversible activation-deactivation balance between a dormant species and an active species (growing macro-radical). This activation-deactivation process enables the chains to grow at the same speed, and this, until the total consumption of the monomer, making controlling the molecular weights of the polymers possible and obtaining the narrow distributions of molecular weights. This will also make it possible to minimise the heterogeneity of the composition. The reversible deactivation of the growing chains lies at the origin of minimising irreversible end reactions. The large majority of polymer chains remains in dormant form and can therefore be reactivated. It is thus possible to functionalise the chain ends in view of priming other polymerisation modes or to make chain extensions. This mechanism makes it possible to access at high molecular weights, controlled compositions and architectures.

Controlled radical polymerisation can therefore have the following distinctive aspects:

1. the number of polymer chains is fixed throughout the duration of the reaction,
2. the polymer chains all grow at the same speed, which is reflected by:

    * a linear increase of the molecular weights,
    * a narrowed molecular weight distribution,

3. the mean molecular weight is controlled by the monomer/control agent molar ratio.

The controlled character is all the more marked that the reactivation speed of the radical chains is high in front of the growth speed of the chains (propagation). However, in certain cases, the reactivation speed of the radical chains is greater than or equal to the propagation speed. In these cases, conditions 1 and 2 are not observed and, consequently, controlling the molecular weights is not possible.

Reversible addition-fragmentation chain transfer polymerisation requires the use of a control agent.

The control agent according to the invention is typically a thiocarbonate derivative such as a dithiocarbonate (or xanthate) or trithiocarbonate or a dithiocarbamate derivative described by the formula (I).

In the scope of the invention, the water-soluble control agent is of formula (I):

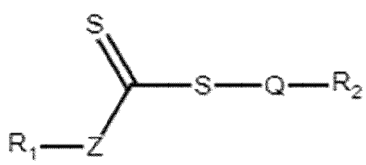

(I)

wherein

- Z represents O, S or $NR_3$;
- $R_1$ and $R_2$ and $R_3$, identical or different, represent:

    * an optionally substituted alkyl, acyl, alcenyl or alcynyl group (i), or
    * a carbon cycle (ii), saturated or not, optionally substituted or aromatic, or
    * a heterocycle (iii), saturated or not, optionally substituted or aromatic,

these groups and cycles (i), (ii) and (iii) being able to be substituted by substituted aromatic groups or by alkoxycarbonyl or aryloxycarbonyl (-COOR), carboxy (-COOH), acyloxy ($-O_2CR$), carbamoyl ($-CON(R)_2$), cyano (-CN), alkylcarbonyl, alkylarylcarbonyl, arylcarbonyl, arylalkylcarbonyl, phtalimido, maleimido, succinimido, amidino, guanidimo, hydroxy (-OH), amino ($-N(R)_2$), halogen, allyl, epoxy, alkoxy (-OR), S-alkyl, S-aryl groups, groups having a hydrophilic or ionic character, such as carboxylic acid alkaline salts, sulfonic acid alkaline salts, alkylene polyoxide chains (POE, POP), cationic substitutes (quaternary ammonium salts);
R represents a $C_1$-$C_{20}$ alkyl or aryl group;

- $R_3$ can further represent a hydrogen atom;
- Q is a single bond between the sulfur atom and the $R_2$ group, or a linear or structured polymeric chain comprising n identical or different monomers comprising at least one ethylenic function;
- n is an integer of between 2 and 500, advantageously between 2 and 100, more between advantageously 2 and 50. The monomer(s) used to form Q are advantageously selected from the same hydrophilic monomers used to form the water-soluble block polymer and described below in the description.

According to an embodiment, Z = S-Q' (formula (I) = $R_1$-Q'-S-C(=S)-S-Q-$R_2$), wherein Q' is a linear or structured polymeric chain comprising n' identical or different monomers comprising at least one ethylenic function. Q' and n' are defined according to the definition of Q and n, as shown above below. Q and Q' may be equal or different. n and n' may be equal or different.

Q is typically a linear or structured, preferably linear, polymer chain.

In the $N(R)_2$ functions, the two R groups can be identical or different from one another.

According to a preferred embodiment, the water-soluble control agent is of formula (I), is a dithiocarbonate or xanthate derivative, wherein Z = O.

According to a preferred embodiment, the water-soluble control agent is of formula (I), wherein:

- Z = O;
- Q is a single bond or a linear or structured polymer chain obtained from 2 to 100 monomers comprising at least one non-ionic hydrophilic monomer and/or at least one anionic hydrophilic monomer and/or at least one cationic hydrophilic monomer.

According to another preferred embodiment, the water-soluble control agent is of formula (I), wherein:

- Z = O;
- Q is a single bond or a linear or structured polymer chain obtained from 2 to 100 monomers comprising at least one non-ionic hydrophilic monomer and/or at least one anionic hydrophilic monomer and/or at least one monomer comprising an LCST group.

According to another preferred embodiment, the water-soluble control agent is of formula (I), wherein Z = O, Q is a polymer chain of an acrylamide monomer, n is an integer of between 2 and 100, preferably between 2 and 50 represented by formula (II):

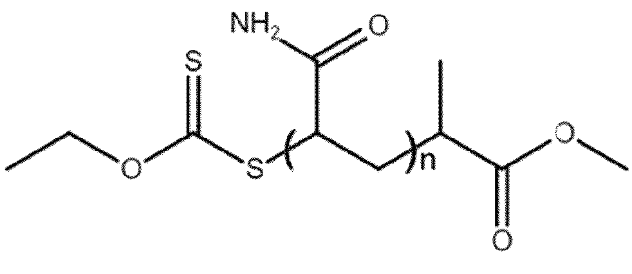

(II)

In another preferred embodiment, the control agent is a trithiocarbonate of formula (I), wherein Z = S.

In another preferred embodiment, the control agent of formula (I) is a trithiocarbonate, wherein Z = S represented by formula (III):

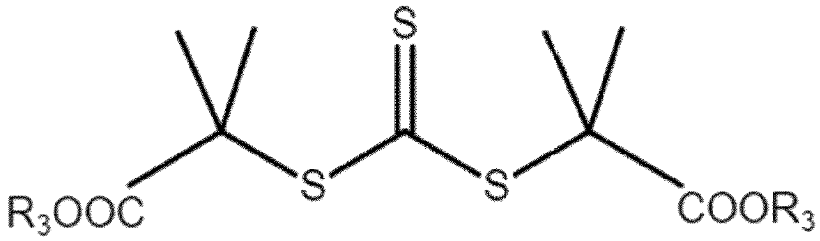

(III)

wherein Q is a single bond between the sulfur atom and the $R_2$ (alkoxycarbonyl) group = - $CH(CH_3)_2$-$CO_2R_3$ and:

- the $R_3$ are identical or different, independently representing an H or a $CH_3$ or a monovalent or divalent cation, advantageously selected among cations of alkaline metal (Li, Na, K, etc.), alkaline earth metal (Ca, Mg, etc.) or ammonium ion (for example, ammonium ion or a tertiary ammonium). Preferably, this is sodium.

In another preferred embodiment, the control agent is a trithiocarbonate of following formula (IV):

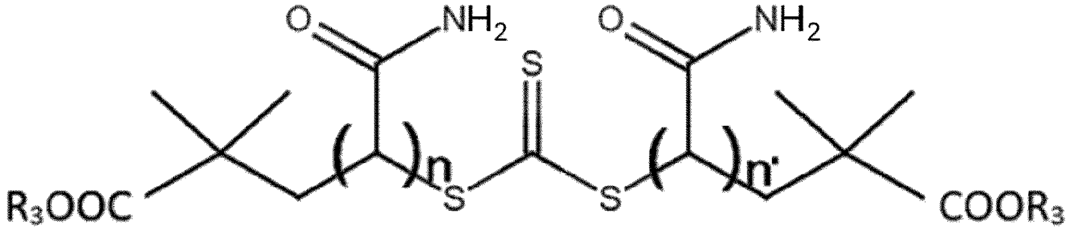

(IV)

wherein Z = S-Q'; wherein Q' is a polymer chain of an acrylamide monomer; Q is a polymer chain of an acrylamide monomer and:

- the $R_3$ are identical or different, independently represent an H or a $CH_3$ or a monovalent or divalent cation, advantageously selected from cations of alkaline metals (Li, Na, K, etc.), alkaline earth metals (Ca, Mg, etc.) or ammonium ion (for example, ammonium ion or a tertiary ammonium), preferably this is sodium;
- n and n' are integers independent of one another, of between 1 and 100, preferably between 1 and 50.

In another preferred embodiment, the control agent of formula (I) is a trithiocarbonate, wherein Z = S, $R_2$ = $-CH(CH_3)COOR_3$ and $R_1$ = $-(CH_2)_2CO_2R_3$ represented by the following formula (V):

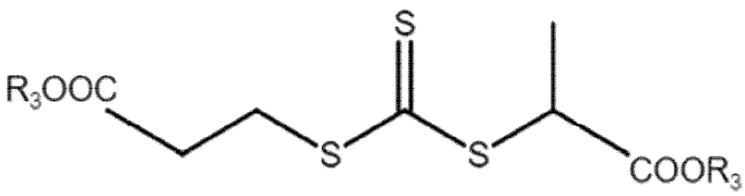

(V)

and wherein Q is a single bond between the sulfur atom and the $R_2$ group:

- the $R_3$ are identical or different, independently represent an H, a $CH_3$ or a monovalent or divalent cation, advantageously selected from cations of alkaline metals (Li, Na, K, etc.), alkaline earth metals (Ca, Mg, etc.) or ammonium ion (for example, ammonium ion or a tertiary ammonium). Preferably, this is sodium.

In another preferred embodiment, the control agent is of formula (I), wherein Z = S, and Q is a polymer chain of an acrylamide monomer represented by the formula (VI):

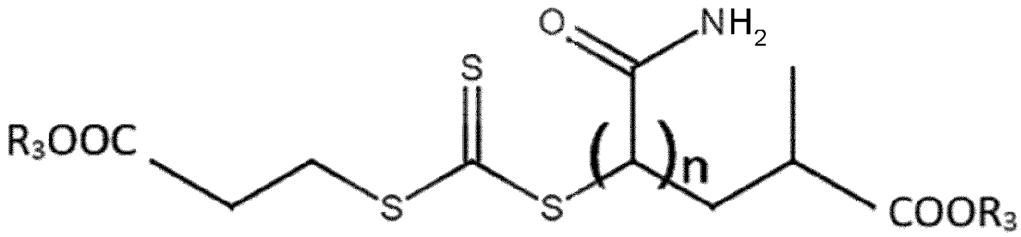

(VI)

and the $R_3$, identical or different, independently represent an H, a $CH_3$ or a monovalent or divalent cation, advantageously selected from cations of alkaline metals (Li, Na, K, etc.), alkaline earth metals (Ca, Mg, etc.) or ammonium ion (for example, ammonium ion or a tertiary ammonium), preferably this is sodium; and

- n is an integer, of between 2 and 100, preferably between 2 and 50.

**Inverse emulsion polymerisation**

Polymerisation is carried out in inverse emulsion. The expression "inverse emulsion" means both inverse emulsions and inverse microemulsions. These are water-in-oil emulsions, wherein the hydrophilic phase is dispersed in the lipophilic phase in the form of drops or droplets.

An inverse emulsion consists of a two-phase medium. It can be unstable in the absence of surfactant (the surfactants group together the water-in-oil emulsifying agents and the oil-in-water emulsifying agents). Under stirring, hydrophilic phase particles are observed, dispersed in a lipophilic phase, having a wide size distribution around an average, which can be around one micrometer. During an inverse emulsion polymerisation, the monomer is dispersed in large droplets of the emulsion (diameter: around 1 $\mu$m to 10 $\mu$m), as well as in small emulsifying micelles (diameter: around 5 to 10 nm).

This polymerisation technique is well-known to a person skilled in the art. It consists of putting a hydrophilic phase in emulsion comprising one or more monomers in a lipophilic phase. This emulsification is done thanks to a water-in-oil emulsifying agent.

*Step a)*

Step a) comprises the mixture of a hydrophilic phase and a lipophilic phase PL1.

The hydrophilic solvent SH1 of the hydrophilic phase can be any solvent capable of solubilising a hydrophilic monomer. Advantageously, this is water.

The quantity of monomer A in the hydrophilic phase PH1 is advantageously between 10 and 50% by weight with respect to the total weight of the hydrophilic phase PH1, preferably between 15 and 45% by weight, more preferably between 20 and 40% by weight.

The quantity of monomer A in the hydrophilic phase PH1 is advantageously between 0.1 and 99.9 mol% with respect to the total quantity of monomer of the water-soluble block polymer, preferably between 1 and 99 mol%, more preferably between 5 and 95 mol%, more preferably between 10 and 90 mol%, more preferably between 15 and 80 mol%, more preferably between 20 and 50 mol%.

The quantity of water-soluble control agent in the hydrophilic phase PH1 is advantageously between $5x10^{-7}$% and 10% by weight with respect to the total weight of the hydrophilic phase PH1, preferably between $5x10^{-4}$ and 5% by weight.

The mass ratio between the monomer(s) A and the water-soluble control agent in the hydrophilic phase PH1 is advantageously between 150:1 and 500000:1, preferably between 100:1 and 300000:1, more preferably between 50:1 and 150000:1, more preferably between 10:1 and 100000:1.

The lipophilic solvent of the lipophilic phase PL1 can be a mineral oil, a vegetable oil, a synthetic oil or a mixture of these oils.

Examples of mineral oils are mineral oils containing saturated or unsaturated hydrocarbons of the aliphatic, naphtenic, paraffinic, isoparaffinic, cycloparaffinic or naphtyl type include Exxsol™ D100, l'Exxsol™ D80, Isopar™ J, Isopar™ K, Isopar™ L, Isopar™ M, Isopar™ N commercialised by ExxonMobile, white oils.

Examples of vegetable oils are squalene, an ester- or triglyceride-type oil, like coco caprylate/caprate, octyldodecyl myristate, ethoxylated vegetable oils, jojoba oil, macadamia oil.

Examples of synthetic oils are hydrogenated polydecene or hydrogenated polyisobutene, esters such as octyl stearate or butyl oleate.

The water-in-oil emulsifying agent is advantageously selected from the following list: polyesters having a

molecular weight of between 1000 and 3000 g/mol; condensation products between a succinic poly(isobutenyl) acid or its anhydride and a glycol polyethylene; sequenced block water-soluble polymers having a molecular weight of between 2500 and 3500 g/mol, like for example those sold under Hypermer® names; sorbitan extracts, such as monooleate or sorbitan polyoleates; sorbitan isostearate or sorbitan sesquioleate; polyethoxylated sorbitan esters; diethyoxyl oleocetylic alcohol; tetraethoxyl laurylacrylate; fatty alcohol condensation products greater than ethylene, like oleic alcohol reaction product with 2 ethylene oxide units; alkylphenol and ethylene oxide condensation products, such as the nonyl phenol reaction product with 4 ethylene oxide units. Ethoxyl fatty amines such as Witcamide® 511, betaine-based products and ethoxyl amine are also good candidates as water-in-oil emulsifying agents.

The quantity of water-in-oil emulsifying agent in the lipophilic phase PL1 is advantageously between 5 and 30% by weight with respect to the total weight of the inverse emulsion, preferably between 10 and 25% by weight, more preferably between 15 and 20% by weight.

The mixture of the hydrophilic phase PH1 and the lipophilic phase PL1 is carried out under stirring, advantageously at a speed of between 10 and 10 000 rpm (rotations per minute), preferably between 100 and 1 000 rpm.

The stirring can be done by any system enabling a homogeneous mixture, as an example, a mixing foot, a homogeniser can be mentioned. Preferably, the mixture is done with a mixing foot.

The stirring is advantageously maintained during step b).

The ratio by weight between the hydrophilic phase PH1 and the lipophilic phase PL1 in the inverse emulsion EMI1 is advantageously between 50/50 and 90/10, preferably between 60/40 and 85/15, more preferably between 70/30 and 80/20.

The quantity of monomer(s) in the inverse emulsion EMI1 is advantageously between 5 and 50% by weight with respect to the total weight of the inverse emulsion EMI1, preferably between 15 and 40% by weight.

*Step b)*

The polymerisation P1 is done in the presence of at least one initiator.

The initiator can be added to the hydrophilic phase PH1 before or after the formation of the inverse emulsion EMI1. Preferably, the initiator is added before the formation of the inverse emulsion EMI1.

In the case of redox catalyst, it is possible to put the oxidiser in PH1 and to pour the reducer or vice versa.

The polymerisation initiators advantageously used can be selected from the compounds which are separated into radicals under polymerisation conditions, for example: organic peroxides, hydroperoxides, hydrogen peroxide, persulfates, azoic compounds and redox catalysts. Using initiators which are soluble in water is preferred. In certain cases, it is advantageous to use mixtures of various polymerisation initiators, for example, mixtures of redox salts and of azoic compounds.

Advantageously, the quantity of initiator is between 5 and 1 000 ppm with respect to the total weight of monomer A of the hydrophilic phase PH1, preferably between 10 and 500 ppm, more preferably between 20 and 100 ppm.

Prior to polymerisation, the atmosphere of the polymerisation vessel can be replaced by an inert gas, like for example, nitrogen or argon.

The polymerisation is done, advantageously at a temperature of between 1 and 70°C, preferably between 5 and 60°C, more preferably between 20 and 40°C.

The duration of the polymerisation is advantageously between 60 minutes and 300 minutes, preferably between 90 minutes and 240 minutes.

Once the polymerisation is primed, the prepolymer PP1 starts to form.

The prepolymer PP1 obtained at the end of the polymerisation P1, has a molecular weight advantageously of between 15 000 and 2 500 000g/mol, preferably between 20 000 and 2 000 000g/mol, more preferably between 25 000 and 1 500 000g/mol. This is the mean molecular weight by weight.

The prepolymer PP1 of the hydrophilic phase PH1 of the inverse emulsion EMI1 has an apparent viscosity of between 400 and 100 000 cps after the formation of the prepolymer PP1, preferably between 1 000 and 90 000cps.

*Step c)*

Step c) can start before the end of polymerisation step b) (but after the end of the addition of the initiator). In other words, it is not necessary to expect that all of the monomers comprised in the emulsion EMI1 have polymerised to start adding the hydrophilic phase PH2. Preferably, the step c) starts at the end of step b).

The hydrophilic phase PH2 has a distinct composition of the hydrophilic phase PH1.

By distinct composition, is meant a composition of different monomers (ratio and/or nature of the monomers).

In a preferred embodiment, the hydrophilic phase PH2 has no control agent.

The combination of the reversible addition-fragmentation chain transfer, of starting step c) at the end of step b) and the use of different monomers A and B, makes it possible to access polymers having a block structure, which is not

possible by using a conventional inverse emulsion polymerisation method.

The hydrophilic solvent SH2 of the hydrophilic phase PH2 can be different from or identical to the hydrophilic solvent SH1 of the hydrophilic phase PH1.

The hydrophilic solvent SH2 is such as defined for SH1. Preferably, this is the same hydrophilic solvent, advantageously, this is water.

The quantity of monomer B in the hydrophilic phase PH2 is advantageously between 10 and 40% by weight with respect to the total weight of the hydrophilic phase PH2, preferably between 15 and 35% by weight, more preferably between 20 and 30% by weight.

The quantity of monomer B in the hydrophilic phase PH2 is advantageously between 0.1 and 99.9 mol% with respect to the total quantity of monomer of the water-soluble block polymer, preferably between 1 and 99 mol%, more preferably between 5 and 95 mol%, more preferably between 10 and 90 mol%, more preferably between 15 and 80 mol%, more preferably between 20 and 50 mol%.

The incorporation of the hydrophilic phase PH2 to the inverse emulsion EMI1 can be done continuously or discontinuously and/or once or several times. Preferably, the addition is done once.

In a particular embodiment, the hydrophilic phase PH2 comprises at least one water-in-oil emulsifying agent, advantageously selected from the list described above.

In a particular embodiment, it is possible, in addition, to the hydrophilic phase PH2 to incorporate a lipophilic phase PL2 in order to adjust the ratio by weight of phase between the sum of the hydrophilic phases (PH1 + PH2) and the sum of the lipophilic phases (PL1 + PL2) of the inverse emulsion.

In the inverse emulsion EMI2, the weight ratio between (hydrophilic phase PH1 + hydrophilic phase PH2) and (lipophilic phase PL1 + optionally lipophilic phase PL2) is advantageously comprised between 50/50 and 90/10, preferably between 60/40 and 85/15, more preferably between 70/30 and 80/20.

The initiator for polymerisation P2 can be added directly into the hydrophilic phase PH2 or poured once in the formed EMI2.

The mixture of the hydrophilic phase PH2 and of the inverse emulsion EMI1 is done under stirring, advantageously at a speed of between 50 and 1 000 rpm (rotations per minute), preferably between 100 and 500 rpm.

The duration of the mixture of the hydrophilic phase PH2 and of the inverse emulsion EMI1 is advantageously comprised between 30 minutes and 480 minutes, preferably between 40 minutes and 240 minutes, more preferably between 60 minutes and 120 minutes.

The stirring can be done by any system enabling a homogeneous mixture, as an example, a mixing foot, a homogeniser, a mixing arm, a stirring ink can be mentioned. Preferably, the mixture is done with a stirring ink.

*Step d)*

The polymerisation P2 is done in the presence of at least one initiator.

The initiator can be added to the hydrophilic phase PH2 before or after the formation of the inverse emulsion EMI2. Preferably, the initiator is added before the formation of the inverse emulsion EMI2.

In the case of redox catalyst, it is possible to put the oxidiser in PH2 and to pour the reducer or vice versa.

The initiator is advantageously selected from the initiators described above. Preferably, this is the same initiator as that used to prime the polymerisation of step b).

Advantageously, the quantity of initiator present in the hydrophilic phase PH2 is between 5 and 1 000 ppm with respect to the total weight of active material (PP1 + monomer B) implemented for the polymerisation P2, preferably between 10 and 500 ppm, more preferably between 20 and 100 ppm.

The polymerisation is advantageously done at a temperature of between 5 and 70°C, preferably between 10 and 50°C, more preferably between 20 and 40°C.

The duration of the polymerisation is advantageously between 60 minutes and 300 minutes, preferably between 90 minutes and 240 minutes.

Once the addition of the hydrophilic phase PH2 has started, the water-soluble block polymer forms.

In a preferred embodiment, the polymerisation P2 is done in the continuity of the polymerisation P1, in other words, the conditions being applied to the polymerisation P2 are the same as the conditions of polymerisation P1.

The polymerisation is considered complete, when a conversion rate of at least 70 mol% of the monomers (A+B) is reached with respect to the total quantity of monomers present in the reactional medium, preferably at least 75 mol%, more preferably at least 80 mol%, even more preferably at least 85 mol%, even more preferably at least 90 mol%, and even more preferably at least 95 mol%. A person skilled in the art will know how to determine the conversion rate of the monomers, which remains a common practice and forms part of their general knowledge.

The quantity of water-soluble block polymer in the inverse emulsion EMI2 is advantageously between 5 and 50% by weight with respect to the total weight of the inverse emulsion EMI2, preferably between 15 and 40% by weight.

*Particular and optional embodiment(s)*

The method of the invention is not limited to the steps described above and can comprise others.

The method of the invention can comprise the addition of at least one oil-in-water emulsifying agent.

The addition of at least one oil-in-water emulsifying agent is done generally at the end of step d).

The oil-in-water emulsifying agent(s) are advantageously selected from ethoxylated nonylphenol, preferably having 4 to 10 ethoxylations (i.e. preferably having an ethoxylation degree going from 4 to 10); ethoxylated/propoxylated alcohols preferably having an ethoxylation/propoxylation comprising 12 to 25 carbon atoms; ethoxylated tridecyl alcohols; ethoxylated/propoxylated fatty alcohols; ethoxylated sorbitan esters (advantageously having 20 ethylene oxide molar equivalents); polyethoxylated sorbitan laurate (advantageously having 20 ethylene oxide molar equivalents); polyethoxylated castor oil (advantageously having 40 ethylene oxide molar equivalents); decaethoxylated oleodecyclic alcohol; hepta oxyethylated lauric alcohol; polyethoxylated sorbitan monostearate (advantageously having 20 ethylene oxide molar equivalents); cetyl ether polyethoxylated phenol alkyls (advantageously having 10 ethylene oxide molar equivalents); aryl ether alkyl ethylene polyoxides; N-cetyl-N-ethyl morpholinium ethosulfate; sodium sulfate lauryl; fatty alcohol condensation products with ethylene oxide (advantageously having 10 ethylene oxide molar equivalents); alkylphenol and ethylene oxide condensation products (advantageously having 12 oxide ethylene molar equivalents); fatty amine condensation products with 5 molar equivalent or more ethylene oxide (advantageously 5 to 50 equivalents); ethoxylated phenol tristyryl, condensates of ethylene oxide with partially esterified polyhydric alcohols with fatty chains, as well as their anhydrous forms; amine oxides advantageously having alkyl polyglucosides; glucamide; phosphate esters; sulphonic alkylbenzene acids and their salts; and surfactant block polymers and their mixtures. The alkyl groups of these oil-in-water-type emulsifying agents mean linear or branched groups and advantageously having 1 to 20 carbon atoms, more advantageously 3 to 15 carbon atoms. Furthermore, the aryls of these oil-in-water-type emulsifying agents advantageously comprise 6 to 20 carbon atoms, more advantageously 6 to 12 carbon atoms.

Generally, the inverse emulsion comprises between 0.01 and 10% by weight of oil-in-water emulsifying agent with respect to the total weight of the inverse emulsion.

The method of the invention can be done in batch, in semi-batch or continuously. It is advantageously done in batch.

In a particular embodiment, the steps b) and d) are carried out at a pressure less than the atmospheric pressure, preferably at a pressure of between 20 and 800 mbar, more preferably of between 30 and 500 mbar, more preferably between 40 and 400 mbar.

In a particular embodiment, the method of the invention comprises, following the polymerisation P1 and/or following the polymerisation P2, a step of removal of the residual monomers. The removal of the residual monomers can be done, for example, by the addition of an excess initiator.

The invention is not limited to the addition of a second hydrophilic phase PH2, it can comprise the addition of n hydrophilic phases (with n an integer greater than or equal to 2, $n \geq 2$). In this case, the monomers of the hydrophilic phase PHn react on the prepolymer PPn-1 and it is thus possible to obtain so-called multiblock polymers. The monomers present in these n hydrophilic phases being able to be identical or different, in order to obtain multiblock polymers constituted of different blocks (W-X-Y-Z) or multiblock polymers having an alternate structure (X-Y-X-Y).

It is possible to add as many hydrophilic phases as desired, insofar as the molecular weight of the prepolymer PP1 is between 10 000 g/mol and 3 000 000 g/mol, preferably between 15 000 g/mol and 2 500 000 g/mol, more preferably between 20 000 g/mol and 2 000 000 g/mol, and more preferably between 25 000 g/mol and 1 500 000 g/mol, that the molecular weight of the prepolymer PPn-1 obtained before the addition of the last hydrophilic phase PHn has a molecular weight less than 3 000 000 g/mol, preferably less than 2 500 000 g/mol, more preferably less than 2 000 000g/mol, and even more preferably less than 1 500 000 g/mol, and that the apparent viscosity of the prepolymer PP1 of the hydrophilic phase PH1 of the inverse emulsion EMI1 is between 400 and 100 000 cps, preferably between 1 000 and 90 000 cps and that the apparent viscosity of the prepolymer PP(n-1) of the hydrophilic phase PH(n-1) is less than 100000 cps, preferably less than 90 000 cps.

At the same time, it is possible in addition to add other lipophilic phases PLq (with q, an integer greater than or equal to 1, $n \geq 1$) in order to adjust the phase weight ratio between the sum of the hydrophilic phases (PH1 + PH2 + PHn) and the sum of the lipophilic phases (PL1 + PLq) of the inverse emulsion.

In a particular embodiment, the method of the invention comprises an optional step e) of concentrating the inverse emulsion EMI2, advantageously by distillation, to form an inverse emulsion EMI2'. This concentration step consists of removing at least some of the hydrophilic phase and/or the lipophilic phase of the emulsion EMI2.

In the case of adding n hydrophilic phases and/or q lipophilic phases, the inverse emulsion EMIn is advantageously distilled to form the inverse emulsion EMIn' (with n an integer greater than or equal to 3, $n \geq 3$).

The distillation can be continuous or discontinuous, with azeotropic entrainment. Preferably, the distillation is continuous and a light oil (boiling point less than 200°C) is advantageously used as a lipophilic solvent to facilitate the entrainment of the water.

The inverse emulsion EMI2' advantageously comprises between 20 and 80% by weight of water-soluble block polymer with respect to the total weight of the inverse emulsion EMI2', preferably between 30 and 70% by weight, more preferably between 35 and 60% by weight.

**Composition of the water-soluble block polymer**

The method of preparation by radical polymerisation according to the invention can be applied for preparing any types of water-soluble block polymers.

The monomers A and B are advantageously selected from the monomers comprising at least one ethylenic function selected from non-ionic hydrophilic monomers, anionic hydrophilic monomers, cationic hydrophilic monomers, zwitterionic hydrophilic monomers, hydrophobic monomers, and their mixtures.

The invention is applicable to any monomeric composition of the water-soluble block polymer. Thus, the invention cannot be limited to a precise and preferred monomeric composition.

The monomers A and B can be identical or different. Preferably, they are different.

When the monomers A and B are identical, a water-soluble homopolymer is thus obtained.

When the monomers A and B are different, a water-soluble block copolymer is thus obtained.

Advantageously, the non-ionic hydrophilic monomer(s) that may be used in the scope of the invention are selected, in particular, fromacrylamide, methacrylamide, N-alkylacrylamides, N-alkylmethacrylamides, N,N-dialkyl acrylamides (for example, N,N-dimethylacrylamide or N,N-diethylacrylamide), N,N-dialkylmethacrylamides, acrylic acid alkoxyl esters, methacrylic acid alkoxyl esters, N-vinylpyrrolidone, N-methylol(meth)acrylamide, N-vinyl caprolactame, N-vinylformamide (NVF), N-vinyl acetamide, N-vinyl imidazole, N-vinyl succinimide, acryloyl morpholine (ACMO), glycidyl methacrylate, vinyl acetate, glyceryl methacrylate, diacetone acrylamide, methacrylic anyhydride, acrylonitrile, maleic anydride, itaconic anhydride, itaconamide, hydroxyalkyl (meth)acrylate, thioalkyl (meth)acrylate, isoprenol and its alcoxyl derivatives, hydroxyethyl(meth)acrylates and their alcoxyl derivatives, hydroxypropyl(meth)acrylate and its alcoxyl derivatives, and their mixtures. Among these non-ionic monomers, the alkyl groups are advantageously $C_1$-$C_5$, more advantageously $C_1$-$C_3$. Preferably, the non-ionic hydrophilic monomer is acrylamide.

Advantageously, the anionic hydrophilic monomer(s) that may be used in the scope of the invention can be selected from a broad group. These monomers can have a vinyl function, in particular, acrylic, maleic, fumaric, itaconic, or allylic. They can also contain a carboxylate, phosphonate, phosphate, sulfonate, sulfate group, or another anionic filler group. Preferred monomers belonging to this class are, for example, acrylic acid; methacrylic acid; dimethylacrylic acid; acryloyl chloride; crotonic acid; maleic acid; fumaric acid; 3-acrylamido 3-methylbutanoic acid; strong acid-type monomers having, for example, a sulfonic acid- or phosphonic acid-type function, such as vinylsulfonic acid, vinylphosphonic acid, allylsulfonic acid, methallylsulfonic acid, 2-methylidenepropane-1,3-disulfonic acid, 2-sulfoethylmethacrylate, sulfopropylmethacrylate, sulfopropylacrylate, allylphosphonic acid, ethylene glycol methacrylate phosphate, sulfonic styrene acid, 2-acrylamido-2-methylpropane sulfonic acid (ATBS), 2-acrylamido-2-methylpropane disulfonic acid, 3-allyloxy-2-hydroxypropane sulfonic acid, diethylallylphosphonate, carboxyethyle acrylate; water-soluble salts of these monomers as their alkaline metal salts, alkaline earth metals, or ammonium; and their mixtures. Preferably, the anionic hydrophilic monomer is acrylic acid.

In a particular embodiment of the invention, the anionic monomer(s) can be salified. This can also be a mixture of acid form and salified form, for example a mixture of acrylic acid and acrylate.

By salified, is meant the substitution of a proton of at least one acid function of the - $R^a$(=O)-OH type (with $R^a$ representing P, S or C) of the anionic monomer by a metal cation or organic cation to form a salt of the -R(=O)-OX type (X being a metal cation or an organic cation). In other words, the non-salified form corresponds to the acid form of the monomer, for example $R^b$-C(=O)-OH in the case of the carboxylic acid function, while the salified form of the monomer corresponds to the $R^b$-C(=O)-$O^-$ $X^+$, $X^+$ corresponding to a metal cation or an organic cation. The salification of the acid functions can be partial or total.

The metal cation is advantageously an alkaline metal salt (Li, Na, K, etc.) or an alkaline earth metal (Ca, Mg, etc.), and the organic cation is advantageously ammonium ion or a tertiary ammonium. The preferred salts are sodium salts.

The salification can be done before or after polymerisation, preferably before.

In a particular embodiment, the polymer advantageously comprises between 1 and 100 mol% of water-soluble anionic monomer(s) in salified form, preferably between 50 and 100 mol%.

Advantageously, the cationic hydrophilic monomer(s) being able to be used in the scope of the invention are selected, in particular, from the vinyl-type monomers, in particular acrylamide, acrylic, allylic or maleic having a protonable amine function or ammonium, advantageously quaternary ammonium. In particular, and in a non-limiting manner, diallyldialkyl ammonium salts like dimethyldiallylammonium chloride (DADMAC); acidified or quaternised dialkylaminoalkyl(meth)acrylamide salts, like for example (3-methacrylamidopropyl)trimethylammonium chloride (MAPTAC), (3-acrylamidopropyl)trimethylammonium chloride (APTAC); acidified or quaternised dialkylaminoalkyl acrylate salts like quaternised or salified dimethylaminoethyl acrylate (ADAME); acidified or quaternised dialkyl aminoalkyl methacrylate

salts like quaternised or salified dimethylaminoethyl methacrylate (MADAME); acidified or quaternised N,N-dimethylallylamine salts; acidified or quaternised diallylmethylamine salts; acidified or quaternised diallylamine salts; vinylamine obtained by hydrolysis (basic or acid) of an amide group $-N(R^2)-CO-R^1$ with $R_1$ and $R_2$ being, independently, a hydrogen atom or an alkyl chain of 1 to 6 carbons, for example vinylamine coming from the hydrolysis of N-vinylformamide; vinylamine obtained by Hofmann degradation; and their mixtures can be mentioned. Advantageously, the alkyl groups are $C_1$-$C_7$, preferably $C_1$-$C_3$ and can be linear, cyclic, saturated or unsaturated chains. Preferably, the cationic hydrophilic monomer is quaternised or salified dimethylaminoethyl acrylate (ADAME).

A person skilled in the art will know how to prepare the quaternised monomers, for example by means of an R-X-type quaternisation agent, R being an alkyl group and X being a halogen or a sulfate. The quaternisation agent can be selected from dialkyl sulfates comprising 1 to 6 carbon atoms or alkyl halides comprising 1 to 6 carbon atoms. Preferably, the quaternisation agent is selected from methyl chloride, benzyl chloride, dimethylsulfate or diethylsulfate. Furthermore, the present invention also covers DADMAC, APTAC and MAPTAC monomers, in which the counterion is a sulfate, fluoride, bromide or iodide instead of chloride.

By "quaternisation agent", is meant a molecule being able to alkylate a tertiary amine.

Advantageously, the zwitterionic hydrophilic monomer(s) that may be used in the scope of the invention are selected, in particular, from the derivatives of a vinyl-type pattern (advantageously acrylamide, acrylic, allylic or maleic), this monomer has a quaternary amine or ammonium function and a carboxylic- (or carboxylate)-, sulfonic- (or sulfonate)- or phosphoric- (or phosphate)-type acid function.

Preferably, this monomer comprises a quaternary amine or ammonium function and a carboxylic- (or carboxylate)-, sulfonic- (or sulfonate)- or phosphoric- (or phosphate)-type acid function.

In particular, and in a non-limiting manner, dimethylaminoethyl acrylate derivatives can be mentioned, such as 2 - ((2-9 (acryloyloxy) ethyl) dimethylammonio) ethane-1-sulfonate, 3 - ((2-(acryloyloxy) ethyl) dimethylammonio) propane-1-sulfonate, 4 - ((2- (acryloyloxy) ethyl) dimethylammonio) butane-1-sulfonate, [2- (acryloyloxy) ethyl] (dimethylammonio) acetate, derivatives of dimethylaminoethyl methacrylate such as 2 - ((2- (methacryloyloxy) ethyl) dimethylammonio) ethane-1-sulfonate, 3 - ((2- (methacryloyloxy) ethyl) dimethylammonio) propane-1-sulfonate, 4 - ((2 - (methacryloyloxy) ethyl) dimethylammonio) butane-1-sulfonate, [2- (methacryloyloxy) ethyl] (dimethylammonio) acetate, derivatives of dimethylamino propylacrylamide such as 2 - ((3-acrylamidopropyl) dimethylammonio) ethane-1- sulfonate, 3 - ((3-acrylamidopropyl) dimethylammonio) propane-1-sulfonate, 4 - ((3-acrylamidopropyl) dimethylammonio) butane-1-sulfonate, [3- (acryloyl) oxy) propyl] (dimethylammonio) acetate, dimethylamino propyl methylacrylamide, or also derivatives such as 2 - ((3-methacrylamidopropyl) dimethylammonio) ethane-1-sulfonate, 3 - (dimethylammonio) propane-1-sulfonate 4 - ((3-methacrylamidopropyl) dimethylammonio) butane-1-sulfonate and propyl [3-(methacryloyloxy)] (dimethylammonio) acetate and their mixtures.

Other zwitterionic hydrophilic monomers can be used, in particular those described by the Applicant in document WO2021/123599.

In a particular embodiment, the polymer can comprise at least one group with an LCST.

According to the general knowledge of a person skilled in the art, a group with an LCST corresponds to a group of which the water solubility, for a given concentration, is modified above a certain temperature and as a function of salinity. This is a group having a heating transition temperature defining its lack of affinity with the solvent medium. The lack of affinity with the solvent results in opacification or loss of transparency, which can be due to precipitation, aggregation, gelation or viscosification of the medium. The minimum transition temperature is known as the LCST (Lower Critical Solution Temperature). For each concentration of a group with an LCST, a heating transition temperature is observed. It is greater than the LCST, which is the minimum point on the curve. Below this temperature, the polymer is soluble in water; above this temperature, the polymer loses its solubility in water.

In a particular embodiment, the polymer can comprise at least one group with a UCST.

According to the general knowledge of a person skilled in the art, a group with a UCST corresponds to a group of which the water solubility, for a given concentration, is modified below a certain temperature and according to the salinity. This is a group having a cooling transition temperature defining its lack of affinity with the solvent medium. The lack of affinity with the solvent results in opacification or loss of transparency, which can be due to precipitation, aggregation, gelation or viscosification of the medium. The maximum transition temperature is known as the UCST (Upper Critical Solution Temperature). For each concentration of a group with a UCST, a cooling transition temperature is observed. It is lower than the UCST, which is the maximum point on the curve. Above this temperature, the polymer is soluble in water; below this temperature, the polymer loses its solubility in water.

Advantageously, the monomer(s) having a hydrophobic character being able to be used in the scope of the invention can be selected, in particular, from the (meth)acrylic acid esters having (i) a $C_4$-$C_{30}$ alkyl chain or (ii) an arylalkyl ($C_4$-$C_{30}$ alkyl, $C_4$-$C_{30}$ aryl) chain, or (iii) propoxylated chain, or (iv) ethoxylated chain, or (v) ethoxylated and propoxylated chain; alkyl aryl sulfonates ($C_4$-$C_{30}$ alkyl, $C_4$-$C_{30}$ aryl); mono- or di-amides substituted by (meth)acrylamide having (i) a $C_4$-$C_{30}$ alkyl chain, or (ii) an arylalkyle ($C_4$-$C_{30}$ alkyl, $C_4$-$C_{30}$ aryl), or (iii) propoxylated chain, or (iv) ethoxylated chain, or (v) ethoxylated and propoxylated chain; anionic or cationic monomer derivatives of (meth)acrylamide or (meth)acrylic acid

carrying a hydrophobic chain; and their mixtures. The hydrophobic monomers can comprise halogen atoms, for example, chlorine.

Among these hydrophobic monomers:

- alkyl groups are preferably $C_4$-$C_{20}$, more preferably $C_4$-$C_8$ groups. $C_6$-$C_{20}$ alkyls are preferably linear alkyls, while $C_4$-$C_5$ are preferably branched,
- the arylalkyl groups are preferably $C_7$-$C_{25}$, more preferably $C_7$-$C_{15}$,
- ethoxyl chains advantageously comprise between 1 and 200 $-CH_2$-$CH_2$-O- groups, preferably between 6 and 100, more preferably between 10 and 40,
- propoxyl chains advantageously comprise between 1 and 50 $-CH_2$-$CH_2$-$CH_2$-O- groups, more preferably between 1 and 20.

Preferred hydrophobic monomers belonging to these classes are, for example:

- n-hexyl (meth)acrylate, n-octyl (meth)acrylate, octyl (meth)acrylamide, lauryl (meth)acrylate, lauryl (meth)acrylamide, myristyl (meth)acrylate, myristyl (meth)acrylamide, pentadecyl (meth)acrylate, pentadecyl (meth)acrylamide, cetyl (meth)acrylate, cetyl (meth)acrylamide, oleyl (meth)acrylate, oleyl (meth)acrylamide, erucyl (meth)acrylate, erucyl (meth)acrylamide, N-tert-Butyl(meth)acrylamide, vinylpyridine, 2-ethylhexyl acrylate, $C_4$-$C_{22}$ itaconic acid hemi-esters, acidified or quaternised $C_4$-$C_{22}$(meth)arcrylate dialkyl aminoalkyl salts, acidified or quaternised $C_4$-$C_{22}$ dialkyl-aminoalkyl(meth)acrylamide salts, undecanoic acrylamido acid, and their mixtures,
- cationic allyl derivatives of formula (VII) or (VIII):

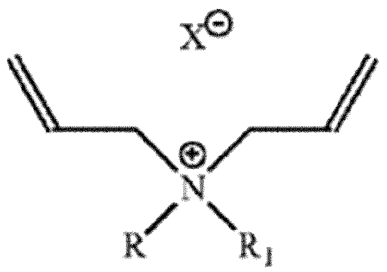

(VII)

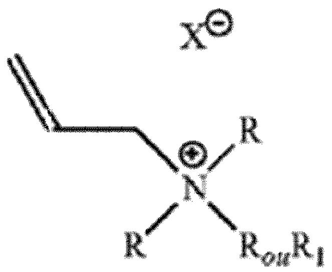

(VIII)

wherein:

R: independently, an alkyl chain containing 1 to 4 carbons;
$R_1$: an alkyl or arylalkyl chain comprising 8 to 30 carbons;
X: a halide selected from the group composed of bromides, chlorides, iodides, fluorides and of any negatively charged counter-ion;
and, preferably, hydrophobic cationic derivatives of the (meth)acryloyl type responding to the formula (IX):

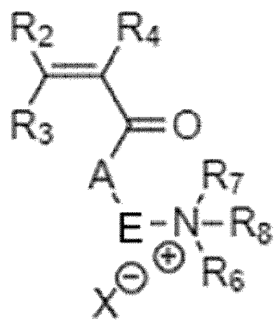

(IX)

wherein:

- A represents O or N-$R_5$ (preferably A represents N-$R_5$),
- $R_2$, $R_3$, $R_4$, $R_5$, $R_6$, $R_7$: independently, a hydrogen atom or an alkyl chain containing 1 to 4 carbons,

- E: an alkyl chain comprising 1 to 20 carbons,
- $R_8$: an alkyl or arylalkyl chain comprising 8 to 30 carbons,
- X: a halide selected from the group composed of bromides, chlorides, iodides, fluorides, and any negatively charged counter-ion.

The water-soluble block polymer advantageously comprises less than 3mol% of hydrophobic monomers.
When the water-soluble block polymer comprises at least one hydrophobic monomer, its quantity is adjusted, such that the polymer remains soluble in water.
The hydrophobic monomer(s) can be added to step a) or c), preferably to step c).
The quantities of the different monomer(s) will be adjusted by a person skilled in the art in order not to exceed 100mol% when preparing the water-soluble block polymer according to the invention.
The water-soluble block polymer can have a linear, branched, cross-linked, star-shaped or comb-shaped structure. This structure can be obtained, according to the general knowledge of a person skilled in the art, for example by selecting the initiator, the transfer agent, the water-soluble control agent, incorporating structural monomers, or concentrating.
The water-soluble block polymer can further be structured by a branching agent. By structured, is meant a non-linear polymer which has side chains.
The branching agent is advantageously selected from:

- structure agents, being able to be selected from the group comprising polyethylically unsaturation monomers (having, as a minimum, two unsaturated functions), like for example, vinyl functions, in particular, allylic or acrylic, and, for example, methylene bis acrylamide (MBA), triallyamine, or tetraallylammonium chloride or 1,2 dihydroxyethylene bis-(N-acrylamide) can be mentioned,
- monomers having at least two epoxy functions,
- monomers having at least one unsaturated function and one epoxy function,
- macroinitiators such as polyperoxides, polyazoics and transfer polyagents, such as polymercaptan polymers, and polyols,
- functionalized polysaccharides,
- water-soluble metal complexes composed:

  * of a metal of valence greater than 3 such as, as an example and in a non-limiting manner, aluminum, boron, zirconium, or also titanium, and
  * of a ligand carrying a hydroxyl function.

The branching agent can be added to step a) or c).
When the water-soluble block polymer comprises a branching agent, it remains soluble in water. A person skilled in the art will know how to adjust the quantity of branching agent and, possibly, the quantity of transfer agent needed to obtain this result.
In a particular embodiment, the water-soluble block polymer does not comprise any branching agent.
In a particular embodiment, the water-soluble block polymer can comprise a transfer agent.
The transfer agent is advantageously selected from methanol; isopropylic alcohol; sodium hypophosphite; calcium hypophosphite; magnesium hypophosphite; potassium hypophosphite; ammonium hypophosphite; formic acid; sodium formiate; calcium formiate; magnesium formiate; potassium formiate; ammonium formiate; 2-mercaptoethanol; 3-mercaptopropanol; glycol dithiopropylene; thioglycerol; thioglycolic acid; thiohydracrylic acid; thiolactic acid; thiomalic acid; cysteine; aminoethanethiol; thioglycolates; allyl phosphites; allyl mercaptans; like n-dodecyl mercaptan; sodium methallysulfonate; calcium methallysulfonate; magnesium methallysulfonate; potassium methallysulfonate; ammonium methallysulfonate; alkyl phosphites like tri alkyl ($C_{12}$-$C_{15}$) phosphites, di-oleyl-hydrogenophosphites, dibutyl phosphite; dialkyldithiophosphates like dioctyl phosphonate; tertiary nonylmercaptan; 2-ethylhexyl thioglycolate; n-octyl mercaptan; n-dodecyl mercaptan; tertio-dodecyl mercaptan; iso-octylthioglycolate; 2-ethylhexyl thioglycolate; 2-ethylhexyl mercaptoacetate; polythiols; and their mixtures. Preferably, this is sodium hypophosphite or sodium formiate.
The transfer agent can be added to step a) or c).
In a particular embodiment, the water-soluble block polymer does not comprise any transfer agent.
The water-soluble block polymer according to the invention can have a molecular weight covering all the applications, wherein high molecular weight polymers can be used. Thus, the water-soluble block polymer advantageously has a molecular weight of at least 100 000 g/mol, preferably of at least 1 000 000g/mol, more preferably of at least 1 500 000g/mol, more preferably of at least 2 000 000g/mol, more preferably of at least 3 000 000g/mol, more preferably of at least 5 000 000g/mol, more preferably of at least 7 000 000g/mol, more preferably of at least 10 000 000g/mol. This is the mean molecular weight by weight. Advantageously, the molecular weight of the water-soluble block polymer is less than 30

000 000g/mol, preferably less than 20 000 000g/mol, and more preferably less than 15 000 000g/mol.

The polydispersity index (Ip) of the polymer obtained according to the invention is advantageously less than or equal to 5 (≤5), preferably less than or equal to 4 (≤4), preferably less than or equal to 3 (≤3), more preferably less than or equal to 2 (≤2), and even more preferably less than or equal to 1.5 (≤1.5). It is advantageously between 1 and 2. The polydispersity index is determined according to the following formula:

$$Ip = Mw/Mn$$

Mw is the mean molecular weight by weight
Mn is the mean molecular weight by number.

The present invention also relates to a water-soluble block polymer obtained according to the method of the invention.

The present invention also relates to the use of this water-soluble block polymer in: hydrocarbon recovery (oil or gas); drilling wells; cementing wells; stimulation of hydrocarbon wells (oil or gas), for example hydraulic fracturing; conformance; diversion; open, closed or semi-closed circuit water treatment; treatment of fermentation broth; sludge treatment; construction; paper or cardboard manufacture; batteries; wood treatment; treatment of hydraulic composition (concrete, cement, mortar and aggregates); mining; formulation of cosmetic products; formulation of detergents; textile manufacture; geothermal energy; manufacture of nappies; or agriculture.

Finally the present invention also relates to the use of this water-soluble block polymer as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticising agent, clay inhibitor or dispersant.

The invention and its advantages will be better understood in the light of the following figures and examples provided in order to illustrate the invention in a non-limiting manner.

**Description of the figures**

Figure 1 illustrates the measurement of the molecular weight of example PP1-CE3 (comparative example) by size-exclusion chromatography (SEC).

Figure 2 illustrates the measurement of the molecular weight of example PP1-6 (Invention) by size-exclusion chromatography (SEC).

Examples

List of abbreviations:

AM: Acrylamide;
AA: Acrylic acid;
ADC: [2-(Acryloyloxy)ethyl]trimethylammonium chloride;
ATBS: Sulfonic 2-acrylamido-2-methylpropane acid.

**Characterisation of the polymers**

**Characterisation of the mean molar masses by number (Mn), by weight (Mw) and polydispersity index**

The polymers have been analysed by size-exclusion chromatography (SEC) in order to determine the mean molar masses (Mn, Mw). The analytical conditions are as follows:

- 1 Shodex™ pre-column referenced SB807-G;
- 2 OHpak Shodex™ columns mounted in series, referenced SB-807 HQ / SB-805 HQ);
- The columns are coupled with a refraction index detector referenced Optilab® T-rEX and Dawn® Heleos® II 18 angles

commercialised by the company Wyatt Technology.

**Characterisations of the apparent viscosities**

The apparent viscosity of the prepolymer PP1 of the hydrophilic phase of the inverse emulsion EMI1 is measured according to the following method:

- precipitation in the acetone of the prepolymer PP1, under stirring at 1000 rotations per minute;
- recovering by filtration of the prepolymer PP1 in solid form;
- drying of the prepolymer PP1 in solid form in a heat chamber at 30°C for 24 hours;
- solubilizing the dried prepolymer PP1 in a 1 M sodium chloride solution, at 7% by weight in water;
- measuring the apparent viscosity of the prepolymer PP1 solution using a Brookfield LVT or LVD viscosimeter at a temperature of 25°C.

**Characterisation of the particle sizes and grain-sized distributions of the inverse emulsions of polymers**

The polymers have been analysed by laser diffraction. The device used is the MASTERSIZER MS3000 commercialised by the company Malvern. This device serves to measure particle sizes comprised in a range from 0.5 to 2 000 µm. It also serves to measure the grain-size distribution of the particles. This device has an organic liquid path for analysing aqueous polymer particles emulsified in oil.

The device is equipped with three main elements which enable the system to consistently and reliably provide accurate grain-size data:

- an optical bench: equipped with a laser beam (1 single optical measuring path)
- a sample dispersion unit
- Mastersizer 3000 software which controls the system when measuring and analysing the diffusion data.

**Example 1: Synthesis of a water-soluble control agent Xa**

In a synthesis reactor, the following are introduced at ambient temperature:

- 4.53 g of o-ethyl-S-(1-methoxycarbonyl)ethyl dithiocarbonate;
- 22.66 g of acrylamide;
- 27.19 g of deionised water;
- 45.31 g of acetic acid;
- 0.32 g of azoic initiator (VA 044).

The reactional mixture is degassed then heated to 60°C. The reaction is stirred for 3 hours.

The control agents Xb to Xh are prepared according to the protocol described in example 1. The nature of the groups composing these control agents Xa to Xh is presented in Table 1 below:

**Table 1: Control agents Xa to Xh**

| Water-soluble control agent $R_1$-Z-C(S)-S-Q-$R_2$ | $R_1$ | $R_2$ | Z | Q | |
|---|---|---|---|---|---|
| | | | | Composition | (g/mol) |
| **Xa** | $C_2H_5$ | $CH(CH_3)-COOH_3$ | O | AM | 700 |
| **Xb** | $C_2H_5$ | $CH(CH_3)-COOCH_3$ | O | AM | 1400 |
| **Xc** | $C_2H_5$ | $CH(CH_3)-COOCH_3$ | O | - | - |
| **Xd** | $C_2H_5$ | $CH(CH_3)-COOCH_3$ | O | AM/AA (70mol%/30 mol%) | 1230 |
| **Xe** | $C_2H_5$ | $CH(CH_3)-COOCH_3$ | O | ADC | 1350 |
| **Xf** | $C_2H_5$ | $CH(CH_3)-COOCH_3$ | O | AM | 50000 |
| **Xg** | $HOOC-C_2H_5$ | $CH(CH_3)-COOH$ | S | - - | - - |
| **Xh** | $HOOC-C(CH_3)_2$ | $C(CH_3)_2-COOH$ | S | - | - |

**Example 2: Preparation of inverse emulsions EMI1 (step a)) and of prepolymers PP1-1 to PP1-23 (step b))**

Example 2a: Preparation of an emulsion EMI1 and of a prepolymer PP1-1 according to the invention

*Preparation of the hydrophilic phase PH1:*

In a reactor equipped with a stirring system are mixed at ambient temperature:

- 276.7 g of acrylamide (50% by weight in water);
- 60.1 g of acrylic acid;
- 170.3 g of deionised water;
- 60.1 g of lye (50% by weight in water)
- 50 ppm of tertio butyl hydroperoxide;
- 5000 ppm of water-soluble control agent Xc with respect to the weight of the monomers.

*Preparation of the lipophilic phase PL1:*

The water-in-oil emulsifying agents (2.5% by weight with respect to the weight of the inverse emulsion), and a mixture of alkanolamide and mono sorbitan oleate, are mixed in 250 g of Exxsol™ D100 oil.

*Emulsification (step a)) and polymerisation (step b)):*

The hydrophilic phase PH1 is mixed and emulsified in the lipophilic phase PL1. The inverse emulsion obtained EMI1-1 is then degassed for 60 minutes before the polymerisation P1-1 is initiated at ambient temperature by pouring 8 mL of an aqueous solution to 1 g/L of sodium metabisulfite to form the prepolymer PP1-1.

**Example 2b: Preparation of inverse emulsions EMI1-2 to EMI1-23 and of prepolymers PP1-2 to PP1-23**

The inverse emulsions EMI1-2 to EMI1-23 and prepolymers PP1-2 to PP1-23 are prepared according to the experimental protocol described in example 2a.

Counter-examples of emulsions and prepolymers are also prepared, without adding control agent, by a protocol identical to that described in example 2a.

The compositions and properties of the EMI1-2 to EMI1-23 and prepolymers PP1-2 to PP1-23 are presented in tables 2 and 3 below.

**Table 2 - Properties of the inverse emulsions EMI1-1 to EMI1-23**

| Invert emulsion | Apparent viscosity (cP, 30 rpm) | Polydispersity of polymer particles in inverse emulsion of PP1 |
|---|---|---|
| **EMI1-1** | 1 380 | Monodispersity |
| **EMI1-2** | 1 210 | Monodispersity |
| **EMI1-3** | 1 320 | Monodispersity |
| **EMI1-4** | 1 750 | Monodispersity |
| **EMI1-5** | 1420 | Monodispersity |
| **EMI1-6** | 1 380 | Monodispersity |
| **EMI1-7** | 1 950 | Monodispersity |
| **EMI1-8** | 5 980 | Monodispersity |
| **EMI1-9** | 21 200 | Monodispersity |
| **EMI1-10** | 12 400 | Monodispersity |
| **EMI1-11** | 9990 | Monodispersity |
| **EMI1-12** | 220 | Monodispersity |
| **EMI1-13** | 102 000 | Monodispersity |
| **EMI1-14** | 1350 | Monodispersity |

(continued)

| Invert emulsion | Apparent viscosity (cP, 30 rpm) | Polydispersity of polymer particles in inverse emulsion of PP1 |
|---|---|---|
| **EMI1-15** | 1 920 | Monodispersity |
| **EMI1-16** | 1 300 | Monodispersity |
| **EMI1-17** | 1 750 | Monodispersity |
| **EMI1-18** | 1 430 | Monodispersity |
| **EMI1-19** | 1 380 | Monodispersity |
| **EMI1-20** | 1 360 | Monodispersity |
| **EMI1-21** | 1 450 | Monodispersity |
| **EMI1-22** | 1 690 | Monodispersity |
| **EMI1-23** | 1400 | Monodispersity |

**Table 3: Composition and properties of the prepolymers according to the invention and comparative examples**

| Prepolymer | Composition (mol%) | | | | Control | Mn (g/mol) of |
|---|---|---|---|---|---|---|
| | AM | AA | ADC | ATBS | agent | polymer in PP1 |
| **PP1-1** | 70 | 30 | - | - | Xc | 355 000 |
| **PP1-2** | 100 | - | - | - | Xa | 347 900 |
| **PP1-3** | 50 | 30 | - | 20 | Xd | 348 500 |
| **PP1-4** | 40 | - | 60 | - | Xe | 1 150000 |
| **PP1-5** | 10 | 90 | - | - | Xg | 415 000 |
| **PP1-6** | - | 50 | 50 | - | Xa | 373 250 |
| **PP1-7** | 20 | 10 | 50 | 20 | Xb | 450 000 |
| **PP1-8** | 5 | - | 95 | - | Xb | 452 000 |
| **PP1-9** | 5 | 95 | - | - | Xf | 561 000 |
| **PP1-10** | - | 100 | - | - | Xc | 1 457000 |
| **PP1-11** | - | - | 100 | - | Xe | 167 450 |
| **PP1-12** | 70 | 30 | - | - | Xa | 352 200 |
| **PP1-13** | 70 | 30 | - | - | Xa | 2 850 000 |
| **PP1-14** | 70 | 30 | - | - | Xa | 4 500 |
| **PP1-15** | 70 | 30 | - | - | Xa | 3 330 000 |
| **PP1-16** | 100 | | - | - | - | 350 400 |
| **PP1-17** | 70 | 30 | - | - | - | 950 600 |
| **PP1-18** | 70 | 30 | - | | - | 365 200 |
| **PP1-19** | 60 | - | - | 40 | - | 345 600 |
| **PP1-20** | 40 | - | 60 | - | - | 355 300 |
| **PP1-21** | - | 50 | 50 | - | - | 350 900 |
| **PP1-22** | 40 | - | 60 | - | - | 1 066 100 |
| **PP1-23** | 50 | 20 | 30 | - | - | 347 200 |

**Example 3: Preparation of inverse emulsions EMI2 and of water-soluble block polymers**

The emulsions EMI2 are obtained by mixing under stirring at 200 rpm for 240 minutes and at ambient temperature of:

- the EMI1 comprising the prepolymer PP1;
- a hydrophilic phase PH2 comprising the monomers entering into the composition of the water-soluble block polymer and 50 ppm of tertio butyl hydroperoxide;
- a lipophilic phase PL2, in order to adjust the quantities of final active materials and the hydrophilic phase/lipophilic phase ratios, comprising water-in-oil emulsifying agents (2.5% by weight with respect to the weight of the inverse emulsion), and a mixture of alkanolamide and of mono sorbitan oleate, mixed with Exxsol™ D100 oil.

The EMI2 is then degassed for 60 minutes before the polymerisation is primed by pouring 8mL of an aqueous solution to 1g/L of sodium metabisulfite.

The particle size, the grain-size distributions and the mean molar masses by number of the water-soluble block polymers of the EMI2 are characterised. To characterise the molar masses, the polymers have been precipitated beforehand in the acetone.

The compositions of the different hydrophilic phases PH2 and the features of the water-soluble block polymers obtained after polymerisation are summarised in Table 4.

**Table 4** - **Composition of the PH2 and features of the water-soluble block polymers** (NM: Non-measurable; LP: Broad Polypopulation)

| **Test** | **Reference PP1** | **Composition (mol%) de PH2** | | | | **Final active material P2(%)** | **Mn measured of polymers P2 (g/mol)** | **Polydispersity of polymer particles in inverse, emulsion of P2** |
|---|---|---|---|---|---|---|---|---|
| | | **AM** | **AA** | **ADC** | **ATBS** | | | |
| E1 | **PP1-1** | 70 | 30 | - | - | 21 | 1 456 000 | Monopopulation |
| E2 | **PP1-2** | 100 | - | - | - | 21 | 1 687 000 | Mononopulation |
| E3 | **PP1-3** | 50 | 30 | - | 20 | 21 | 3 123 600 | Monopopulation |
| E4 | **PP1-4** | 40 | - | 60 | - | 21 | 4 876 000 | Monopopulation |
| E5 | **PP1-5** | 10 | 90 | - | - | 21 | 3 612 000 | Monopopulation |
| E6 | **PP1-6** | - | 50 | 50 | - | 21 | 1 184 000 | Monopopulation |
| E7 | **PP1-7** | 20 | 10 | 50 | 20 | 21 | 2 150 000 | Monopopulation |
| E8 | **PP1-8** | 5 | - | 95 | - | 21 | 877 000 | Monopopulation |
| E9 | **PP1-9** | 5 | 95 | - | - | 21 | 2 894 500 | Monopopulation |
| E10 | **PP1-10** | - | 100 | - | - | 21 | 6 454 000 | Monopopulation |
| E11 | **PP1-11** | - | - | 100 | - | 21 | 913 000 | Monopopulation |
| E-CE 1 | **PP1-12** | 70 | 30 | - | - | 21 | NM - LP | NM - LP |
| E-CE2 | **PP1-13** | 70 | 30 | - | - | 21 | NM - LP | NM - LP |
| E-CE3 | **PP1-14** | 70 | 30 | - | - | 21 | NM - LP | NM - LP |
| E-CE4 | **PP1-15** | 70 | 30 | - | - | 21 | NM - LP | NM - LP |
| E-CE5 | **PP1-16** | 100 | | - | - | 21 | NM - LP | NM - LP |
| E-CE6 | **PP1-17** | 70 | 30 | - | - | 21 | NM - LP | NM - LP |
| E-CE7 | **PP1-18** | 70 | 30 | - | | 21 | NM - LP | NM - LP |
| E-CE8 | **PP1-19** | 60 | - | - | 40 | 21 | NM - LP | NM - LP |
| E-CE9 | **PP1-20** | 40 | - | 60 | - | 21 | NM - LP | NM - LP |
| E-CE10 | **PP1-21** | - | 50 | 50 | - | 21 | NM - LP | NM - LP |
| E-CE11 | **PP1-22** | 40 | - | 60 | - | 21 | NM - LP | NM - LP |

(continued)

| Test | Reference PP1 | Composition (mol%) de PH2 | | | | Final active material P2(%) | Mn measured of polymers P2 (g/mol) | Polydispersity of polymer particles in inverse, emulsion of P2 |
|---|---|---|---|---|---|---|---|---|
| | | AM | AA | ADC | ATBS | | | |
| E-CE12 | **PP1-23** | 50 | 20 | 30 | - | 21 | NM - LP | NM - LP |

These results demonstrate that the presence of a control agent for the formation of a prepolymer PP1 having a well-defined molecular weight combined with a specific apparent viscosity) is necessary in order to afford high molecular weight water-soluble block polymers of the invention.

Figures 1 and 2 show the result of a size-exclusion chromatography for tests E1 and E-CE1. For figure 1, a monodispersity of molecular weights is observed for PP1-12 and during its use to form the water-soluble block polymer, a final polydispersed population is observed, corresponding to the formation of a multitude of droplets of a different size, comprising water-soluble block polymers having variable molecular weights, which corresponds to a poor PH2 integration.

On the contrary for figure 2, a monodispersity is observed for PP1-1 and also for the water-soluble block polymer resulting from its polymerisation, which corresponds to a good PH2 integration, and which makes it possible to obtain water-soluble block polymers of high molecular weights having a monopopulation.

## Claims

**1.** Method for preparing a water-soluble block polymer by radical polymerization, by reversible addition-fragmentation chain transfer in inverse emulsion, comprising the following steps:

a) Mixing of a hydrophilic phase PH1 and of a lipophilic phase PL1 under stirring in order to form an inverse emulsion EMI1,

the hydrophilic phase PH1 comprising at least one hydrophilic solvent SH1, at least one monomer A and at least one water-soluble control agent of formula (I):

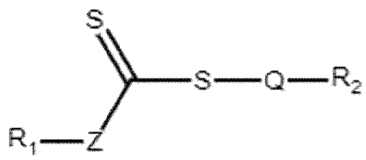

(I)

wherein

- Z represents O, S or $NR_3$;
- $R_1$ and $R_2$ and $R_3$, identical or different, represent:

  * an optionally substituted alkyl, acyl, alcenyl or alcynyl group (i), or
  * a carbon cycle (ii), saturated or not, optionally substituted or aromatic, or
  * a heterocycle (iii), saturated or not, optionally substituted or aromatic,

these groups and cycles (i), (ii) and (iii) being able to be substituted by substituted aromatic groups or by alkoxycarbonyl or aryloxycarbonyl (-COOR), carboxy (-COOH), acyloxy ($-O_2CR$), carbamoyl ($-CON(R)_2$), cyano (-CN), alkylcarbonyl, alkylarylcarbonyl, arylcarbonyl, arylalkylcarbonyl, phtalimido, maleimido, succinimido, amidino, guanidimo, hydroxy (-OH), amino ($-N(R)_2$), halogen, allyl, epoxy, alkoxy (-OR), S-alkyl, S-aryl groups, groups having a hydrophilic or ionic character, such as carboxylic acid alkaline salts, sulfonic acid alkaline salts, alkylene polyoxide chains (POE, POP), cationic substitutes (quaternary ammonium salts);

- R representing a $C_1$-$C_{20}$ alkyl or aryl group;
- $R_3$ can further represent a hydrogen atom;
- Q is single bond between the sulfur atom and the $R_2$ group, or a linear or structured polymer chain comprising n identical or different hydrophilic monomers comprising at least one ethylenic function;

- n is an integer of between 2 and 500;

the lipophilic phase PL1 comprising at least one lipophilic solvent and at least one water-in-oil emulsifying agent;

b) Polymerisation P1, in the presence of at least one initiator, of at least the monomer A of the inverse emulsion EMI1 to form a prepolymer PP1 having a molecular weight of between 10 000 and 3 000 000 g/mol and having an apparent viscosity of between 400 and 100000 cps;
c) Addition to and mixture with the inverse emulsion EMI1, of a hydrophilic phase PH2 comprising at least one hydrophilic solvent SH2, at least one monomer B to form an inverse emulsion EMI2;
the hydrophilic phase PH2 and the hydrophilic phase PH1 having distinct compositions,
d) Polymerisation P2, in the presence of at least one initiator, of at least the monomer B on the prepolymer PP1, in order to form a water-soluble block polymer;

wherein the molecular weight of prepolymer PP1 is determined using the Mark-Houwink equation:

$$[\eta] = K M^{\alpha}$$

in which:

$[\eta]$ represents the intrinsic viscosity of prepolymer PP1
K represents an empirical constant
M represents the molecular weight of prepolymer PP1
$\alpha$ represents the Mark-Houwink coefficient
and wherein the apparent viscosity of the prepolymer PP1 of the hydrophilic phase of the inverse emulsion EMI1 is measured according to the following method:

- precipitation in the acetone of the prepolymer PP1, under stirring at 1 000 rotations per minute;
- recovering by filtration of the prepolymer PP1 in solid form;
- drying of the prepolymer PP1 in solid form in a heat chamber at 30°C for 24 hours;
- solubilizing the dried prepolymer PP1 in a 1 M sodium chloride solution, at 7% by weight in water;
- measuring the apparent viscosity of the prepolymer PP1 solution using a Brookfield LVT or LVD viscosimeter at a temperature of 25°C.

**2.** Method according to claim *1,* ***characterised* in that** the hydrophilic phase PH1 comprises a quantity of monomer A of between 10 and 50%, by weight with respect to the total weight of the hydrophilic phase PH1.

**3.** Method according to claim 1 or 2, ***characterised* in that** the hydrophilic phase PH1 comprises a quantity of water-soluble control agent of between $5x10^{-7}$% and 10%, by weight with respect to the total weight of the hydrophilic phase PH1.

**4.** Method according to one of claims 1 to 3, ***characterised* in that** the lipophilic phase PL 1 comprises a quantity of water-in-oil emulsifying agent of between 5 and 30% by weight, with respect to the total weight of the inverse emulsion.

**5.** Method according to one of claims 1 to 4, ***characterised* in that**, in step c), the addition of the hydrophilic phase PH2 to the inverse emulsion EMI1 is done once.

**6.** Method according to one of claims 1 to 5, ***characterised* in that**, in step c), the mixing of the hydrophilic phase PH2 and of the inverse emulsion EMI1 is done under stirring at a speed of between 50 and 1000 rpm.

**7.** Method according to one of claims 1 to 6, ***characterised* in that**, in step c), the duration of the mixture of the hydrophilic phase PH2 and of the inverse emulsion EMI1 is between 30 minutes and 480 minutes.

**8.** Method according to one of claims 1 to 7, ***characterised* in that** the monomers A and B are selected from non-ionic hydrophilic monomers, anionic hydrophilic monomers, cationic hydrophilic monomers, zwitterionic hydrophilic monomers and hydrophobic monomers.

**9.** Method according to one of claims 1 to 8, ***characterised* in that** the monomers A and B are different.

**10.** Water-soluble block polymer obtained according to one of claims 1 to 9.

**11.** Use of the water-soluble block polymer obtained according to one of claims 1 to 9, in hydrocarbon recovery, drilling wells; cementing wells; hydrocarbon wells stimulation; open, closed or semi-closed circuit water treatment; treatment of fermentation broth; sludge treatment; construction; paper or cardboard manufacture; batteries; wood treatment; treatment of hydraulic compositions; mining; formulation of cosmetic products; formulation of detergents; textile manufacture; geothermal energy; manufacture of nappies; or agriculture.

**12.** Use of the water-soluble block polymer obtained according to one of claims 1 to 9, as a flocculant, coagulant, binding agent, fixing agent, viscosity reducing agent, thickening agent, absorbent agent, friction reducing agent, draining agent, filler retention agent, dehydrating agent, conditioning agent, stabilising agent, film-forming agent, sizing agent, superplasticising agent, clay inhibitor or dispersant.

**Patentansprüche**

**1.** Verfahren zur Herstellung eines wasserlöslichen Blockpolymers durch radikalische Polymerisation mittels reversibler Additions-Fragmentierungs-Kettenübertragung in inverser Emulsion, das folgende Schritte umfasst:

a) Vermischen einer hydrophilen Phase PH1 und einer lipophilen Phase PL1 unter Rühren, um eine inverse Emulsion EMI1 zu bilden,

wobei die hydrophile Phase PH1 mindestens ein hydrophiles Lösungsmittel SH1, mindestens ein Monomer A und mindestens ein wasserlösliches Steuermittel mit folgender Formel (I) umfasst:

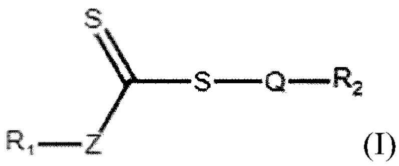

(I)

wobei

- Z für O, S oder $NR_3$ steht;
- $R_1$, $R_2$ und $R_3$ gleich oder verschieden sind, und Folgendes darstellen:

*eine gegebenenfalls substituierte Alkyl-, Acyl-, Alkenyl- oder Alkinylgruppe (i) oder
*einen gesättigten oder ungesättigten Kohlenstoffzyklus (ii), der gegebenenfalls substituiert oder aromatisch ist, oder
*einen gesättigten oder ungesättigten Heterozyklus (iii), der gegebenenfalls substituiert oder aromatisch ist,

wobei diese Gruppen und Zyklen (i), (ii) und (iii) durch substituierte aromatische Gruppen oder durch Alkoxycarbonyl- oder Aryloxycarbonyl- (-COOR), Carboxy- (-COOH), Acyloxy- ($-O_2CR$), Carbamoyl- ($-CON(R)_2$), Cyano- (-CN), Alkylcarbonyl-, Alkylarylcarbonyl-, Arylcarbonyl-, Arylalkylcarbonyl-, Phthalimido-, Maleimido-, Succinimido-, Amidino-, Guanidimo-, Hydroxy (-OH)-, Amino ($-N(R)_2$)-, Halogen-, Allyl-, Epoxy-, Alkoxy (-OR)-, S-Alkyl-, S-Aryl-Gruppen, Gruppen mit hydrophilem oder ionischem Charakter, wie Carbonsäure-Alkalisalze, Sulfonsäure-Alkalisalze, Alkylenpolyoxidketten (POE, POP), kationische Ersatzstoffe (quatäre Ammoniumsalze) ersetzt werden können; wobei

- R für eine $C_1$-$C_{20}$-Alkyl- oder Arylgruppe steht;
- $R_3$ ferner für ein Wasserstoffatom steht;
- Q eine Einfachbindung zwischen dem Schwefelatom und der R2-Gruppe oder eine lineare oder strukturierte Polymerkette ist, die aus n identischen oder unterschiedlichen hydrophilen Monomeren mit mindestens einer ethylenischen Funktion besteht;
- n eine ganze Zahl zwischen 2 und 500 ist;

die lipophile Phase PL1 mindestens ein lipophiles Lösungsmittel und mindestens ein Emulgiermittel Wasser-in-Öl umfasst;

b) Polymerisation P1 von mindestens dem Monomer A der inversen Emulsion EMI1 in Gegenwart mindestens eines Initiators, um ein Prepolymer mit einem Molekulargewicht zwischen 10.000 und 3.000.000 g/mol und einer scheinbaren Viskosität zwischen 400 und 100.000 cps zu bilden;
c) Zugabe einer hydrophilen Phase PH2 zur inversen Emulsion EMI1 und Vermischung, wobei die hydrophile Phase PH2 mindestens ein hydrophiles Lösungsmittel SH2 und mindestens ein Monomer B umfasst, um eine inverse Emulsion EMI2 zu bilden;
wobei die hydrophile Phase PH2 und die hydrophile Phase PH1 unterschiedlich zusammengesetzt sind,
d) Polymerisation P2 mindestens des Monomers B auf dem Prepolymer PP1 in Gegenwart mindestens eines Initiators, um ein wasserlösliches Blockpolymer zu bilden;

wobei das Molekulargewicht des Prepolymers PP1 unter Verwendung der Mark-Houwink-Gleichung bestimmt wird:

$$[\eta] = K\,M^{\alpha}$$

wobei:

[η] für die intrinsische Viskosität des Prepolymers PP1 steht,
K eine empirische Konstante ist,
M das Molekulargewicht des Prepolymers P1 ist,
α der Mark-Houwink-Koeffizient ist,
und wobei die scheinbare Viskosität des Prepolymers PP1 der hydrophilen Phase der inversen Emulsion EMI1 nach dem folgenden Verfahren gemessen wird:

- Ausfällung des Prepolymers PP1 im Aceton unter Rühren bei 1.000 Umdrehungen pro Minute;
- Rückgewinnung durch Filtration des Prepolymers PP1 in fester Form;
- Trocknung des Prepolymers PP1 in fester Form in einer Wärmekammer bei 30 °C für 24 Stunden;
- Solubilisierung des getrockneten Prepolymers PP1 in einer 1 M Natriumchloridlösung mit einem Gewichtsanteil von 7 % in Wasser;
- Messung der scheinbaren Viskosität der Prepolymer-PP1-Lösung mit einem Brookfield LVT- oder LVD-Viskosimeter bei einer Temperatur von 25 °C.

**2.** Verfahren nach Anspruch 1, **dadurch *gekennzeichnet,* dass** die hydrophile Phase PH1 ein Monomer A mit einer Menge zwischen 10 und 50 Gew.-% des Gesamtgewichts der hydrophilen Phase PH1 umfasst.

**3.** Verfahren nach Anspruch 1 oder 2, **dadurch *gekennzeichnet,* dass** die hydrophile Phase PH1 ein wasserlösliches Steuermittel mit einer Menge zwischen 5 x $10^{-7}$ und 10 Gew.-% des Gesamtgewichts der hydrophilen Phase PH1 umfasst.

**4.** Verfahren nach Anspruch 1 bis 3, **dadurch *gekennzeichnet,* dass** die lipophile Phase PL1 einen Emulgator Wasser-in-Öl mit einer Menge zwischen 5 und 30 Gew.-% des Gesamtgewichts der inversen Emulsion umfasst.

**5.** Verfahren nach Anspruch 1 bis 4, **dadurch *gekennzeichnet,* dass** die Zugabe der hydrophilen Phase PH2 zur inversen Emulsion EMI1 in Schritt c) einmalig erfolgt.

**6.** Verfahren nach Anspruch 1 bis 5, **dadurch *gekennzeichnet,* dass** die Mischung der hydrophilen Phase PH2 und der inversen Emulsion EMI1 in Schritt c) unter Rühren mit einer Geschwindigkeit zwischen 50 und 1.000 U/min erfolgt.

**7.** Verfahren nach Anspruch 1 bis 6, **dadurch *gekennzeichnet,* dass** die Mischung der hydrophilen Phase PH2 und der inversen Emulsion EMI1 in Schritt c) zwischen 30 Minuten und 480 Minuten dauert.

**8.** Verfahren nach Anspruch 1 bis 7, **dadurch *gekennzeichnet,* dass** die Monomere A und B aus nichtionischen hydrophilen Monomeren, anionischen hydrophilen Monomeren, kationischen hydrophilen Monomeren, zwitterionischen hydrophilen Monomeren und hydrophoben Monomeren ausgewählt sind.

9. Verfahren nach Anspruch 1 bis 8, **dadurch *gekennzeichnet,* dass** die Monomere A und B unterschiedlich sind.

10. Wasserlösliches Blockpolymer, das nach einem der Ansprüche 1 bis 9 hergestellt wird.

11. Verwendung des wasserlöslichen Blockpolymers, das nach einem der Ansprüche 1 bis 9 bei der Rückgewinnung von Kohlenwasserstoffen beim Bohren von Bohrlöchern, beim Zementieren von Bohrlöchern, bei der Stimulation von Kohlenwasserstoff-Bohrlöchern, bei der Wasseraufbereitung in offenen, geschlossenen oder halbgeschlossenen Kreisläufen, bei der Behandlung von Fermentationsbrühen, bei der Schlammbehandlung, im Baugewerbe; bei der Papier- oder Kartonherstellung; bei Batterien; bei der Holzbehandlung; bei der Behandlung von hydraulischen Verbindungen; im Bergbau; bei der Herstellung von Kosmetika; bei der Formulierung von Waschmitteln; in der Produktion von Textilien; in der Geothermie; bei der Herstellung von Windeln; oder in der Landwirtschaft erhalten wird.

12. Verwendung des wasserlöslichen Blockpolymers, das nach einem der Ansprüche 1 bis 9 hergestellt wird, als Flockungsmittel, Koagulierungsmittel, Bindemittel, Fixiermittel, Viskositätsreduktionsmittel, Verdickungsmittel, Absorptionsmittel, Reibungsreduktionsmittel, Entwässerungsmittel, Füllstoff-retentionsmittel, Dehydratisierungsmittel, Konditionierungsmittel, Stabilisierungs-mittel, Filmbildungsmittel, Schlichtemittel, Superverflüssiger, Toninhibitor oder Dispergiermittel.

## Revendications

1. Procédé de préparation d'un polymère hydrosoluble à blocs par polymérisation radicalaire, par transfert de chaîne par addition-fragmentation réversible en émulsion inverse, comprenant les étapes suivantes :

   a) Mélange d'une phase hydrophile PH1 et d'une phase lipophile PL1 sous agitation afin de former une émulsion inverse EMI1,

   la phase hydrophile PH1 comprenant au moins un solvant hydrophile SH1, au moins un monomère A et au moins un agent de contrôle hydrosoluble de formule (I) :

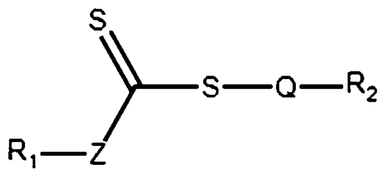

(I)

   dans laquelle

   - Z représente O, S ou $NR_3$ ;
   - $R_1$ et $R_2$ et $R_3$ identiques ou différents, représentent :

     * un groupe (i), alkyle, acyle, alcényle ou alcynyle éventuellement substitué, ou
     * un cycle carboné (ii), saturé ou non, éventuellement substitué ou aromatique, ou
     * un hétérocycle (iii), saturé ou non, éventuellement substitué ou aromatique,

   ces groupes et cycles (i), (ii) et (iii) pouvant être substitués par des groupes aromatiques substitués ou par des groupes alkoxycarbonyle ou aryloxycarbonyle (-COOR), carboxy (-COOH), acyloxy ($-O_2CR$), carbamoyle ($-CON(R)_2$), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino ($-N(R)_2$), halogène, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaines polyoxyde d'alkylène (POE, POP), les substituants cationiques (sels d'ammonium quaternaires) ;

   - R représentant un groupe alkyle ou aryle en $C_1$-$C_{20}$ ;
   - $R_3$ peut en outre représenter un atome d'hydrogène ;
   - Q est une liaison simple entre l'atome de soufre et le groupe $R_2$ ou une chaîne polymérique linéaire ou structurée comprenant n monomères hydrophiles identiques ou différents comprenant au moins une

fonction éthylénique ;
- n est un nombre entier compris entre 2 et 500;

la phase lipophile PL1 comprenant au moins un solvant lipophile et au moins un agent émulsifiant eau-dans-huile ;

b) Polymérisation P1, en présence d'au moins un amorceur, d'au moins le monomère A de l'émulsion inverse EMI1 pour former un prépolymère PP1 ayant un poids moléculaire compris entre 10 000 et 3 000 000 g/mol et présentant une viscosité apparente comprise entre 400 et 100 000 cps ;
c) Ajout et mélange, à l'EMI1, d'une phase hydrophile PH2 comprenant au moins un solvant hydrophile SH2 et au moins un monomère B pour former une émulsion inverse EMI2 ;
la phase hydrophile PH2 et la phase hydrophile PH1 ayant des compositions distinctes,
d) Polymérisation P2, en présence d'au moins un amorceur, d'au moins le monomère B sur le prépolymère PP1 afin de former un polymère hydrosoluble à blocs dans lequel le poids moléculaire du prépolymère PP1 est déterminé par l'équation de Mark-Houwink :

$$[\eta] = K\ M^{\alpha}$$

**[η]** représente la viscosité intrinsèque du polymère déterminée par la méthode de mesure de viscosité en solution
**K** représente une constante empirique
**M** représente le poids moléculaire du polymère
$\alpha$ représente le coefficient de Mark-Houwink
et dans lequel la viscosité apparente du prépolymère PP1 de la phase hydrophile de l'émulsion inverse EMI1 est mesurée selon le procédé suivant :

- précipitation dans l'acétone du prépolymère PP1, sous agitation (à 1 000 rpm (rotations par minute)) ;
- récupération par filtration du prépolymère PP1 sous forme de solide ;
- séchage du prépolymère PP1 sous forme solide dans une étuve à 30 °C pendant 24 heures ;
- remise en solution du prépolymère PP1 séché dans une solution de chlorure de sodium à 1 M à 7 % en poids dans l'eau ;
- mesure de la viscosité apparente de la solution de prépolymère PP1 à l'aide d'un viscosimètre Brookfield LVT ou LVD à une température de 25 °C.

**2.** Procédé selon la revendication 1, ***caractérisé* en ce que** la phase hydrophile PH1 comprend une quantité de monomère A comprise entre 10 et 50 mol%, en poids par rapport au poids total de la phase hydrophile PH1.

**3.** Procédé selon la revendication 1 ou 2, ***caractérisé* en ce que** la phase hydrophile PH1 comprend une quantité d'agent de contrôle hydrosoluble comprise entre $5x10^{-7}$% et 10%, en poids par rapport au poids total de la phase hydrophile PH1.

**4.** Procédé selon l'une des revendications 1 à 3, ***caractérisé* en ce que** la phase lipophile PL1 comprend une quantité d'agent émulsifiant eau-dans-huile comprise entre 5 et 30%, en par rapport au poids total de l'émulsion inverse.

**5.** Procédé selon l'une des revendications 1 à 4, ***caractérisé* en ce que**, dans l'étape c), l'ajout de la phase hydrophile PH2 à l'émulsion inverse EMI1 se fait en une fois.

**6.** Procédé selon l'une des revendications 1 à 5, ***caractérisé* en ce que**, dans l'étape c), le mélange de la phase hydrophile PH2 et de l'émulsion inverse EMI1 se fait sous agitation à une vitesse comprise entre 50 et 1 000 rpm.

**7.** Procédé selon l'une des revendications 1 à 6, ***caractérisé* en ce que**, dans l'étape c), la durée du mélange de la phase hydrophile PH2 et de l'émulsion inverse EMII est comprise entre 30 minutes et 480 minutes.

**8.** Procédé selon l'une des revendications 1 à 7, ***caractérisé* en ce que** les monomères A et B sont choisis parmi les monomères hydrophiles non ioniques, les monomères hydrophiles anioniques, les monomères hydrophiles cationiques, les monomères hydrophiles zwittérioniques et les monomères hydrophobes.

9. Procédé selon l'une des revendications 1 à 8, ***caractérisé* en ce que** les monomères A et B sont différents.

10. Polymère hydrosoluble à blocs obtenu selon l'une des revendications 1 à 9.

11. Utilisation du polymère hydrosoluble à blocs obtenu selon l'une des revendication 1 à 9, dans la récupération d'hydrocarbures ; le forage de puits ; la cimentation de puits ; la stimulation de puits d'hydrocarbures ; le traitement de l'eau en circuit ouvert, fermé ou semi fermé ; le traitement des mouts de fermentation ; le traitement des boues ; la construction ; la fabrication de papier ou de carton ; le domaine des batteries ; le traitement du bois ; le traitement de composition hydraulique ; dans l'industrie minière ; la formulation de produits cosmétiques ; la formulation de détergents ; la fabrication du textile ; la géothermie ; la fabrication de couche hygiénique ; ou l'agriculture.

12. Utilisation du polymère hydrosoluble à blocs obtenu selon l'une des revendication 1 à 9, comme floculant, coagulant, agent liant, agent fixateur, agent réducteur de viscosité, agent épaississant, agent absorbant, agent réducteur de friction, agent d'égouttage, agent de rétention de charge, agent de déshydratation, agent conditionneur, agent stabilisant, agent filmogène, agent d'encollage, agent superplastifiant, inhibiteur d'argile ou dispersant.

Figure 1

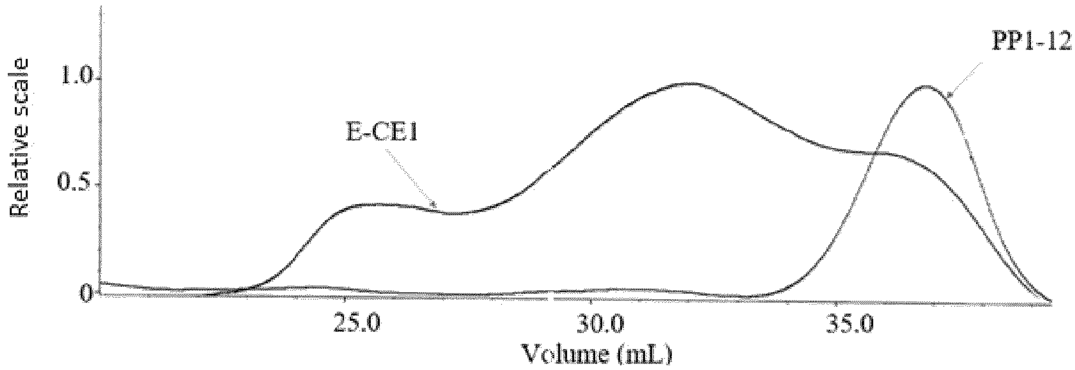


Figure 2

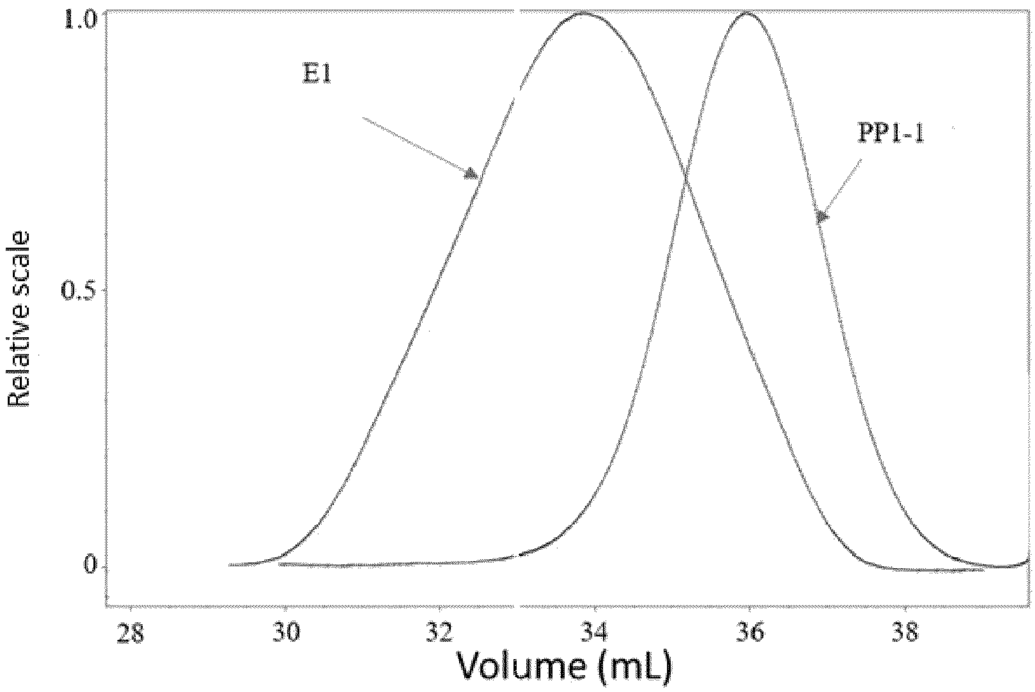

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4152200 A
- US 4191645 A
- US 4217262 A
- US 5171783 A
- WO 2008000766 A
- WO 2020094963 A
- WO 2021123599 A